# EUROPEAN PATENT APPLICATION

(11) **EP 4 546 751 A1**
(43) Date of publication of application: **30.04.2025**
(21) Application number: 23842041.8
(22) Date of filing: 28.06.2023
(51) Int. Cl.: H04L 49/111

(54) **MESSAGE FORWARDING METHOD, APPARATUS AND DEVICE, AND CHIP SYSTEM**

(30) Priority: 18.07.2022 CN 202210844312; 27.12.2022 CN 202211691427
(71) Applicant: Huawei Technologies Co., Ltd., Shenzhen, Guangdong 518129 (CN)
(72) Inventor: HU, Rongguo, Shenzhen, Guangdong 518129 (CN); MO, Daming, Shenzhen, Guangdong 518129 (CN); LI, Chang, Shenzhen, Guangdong 518129 (CN); YU, Qi, Shenzhen, Guangdong 518129 (CN); XIONG, Ying, Shenzhen, Guangdong 518129 (CN)
(74) Representative: Goddar, Heinz J.
(86) International application number: PCT/CN2023/103357
(87) International publication number: WO 2024/016975

(57) **Abstract**

A packet forwarding method, apparatus, and device, and a chip system are disclosed, and relate to the field of communication technologies. The method is applied to a packet forwarding device including a processor and a coprocessor, and includes: The packet forwarding device receives a first packet, and queries a flow table based on flow identification information carried in the first packet. When a target flow entry matching the flow identification information carried in the first packet exists in the flow table, the coprocessor of the packet forwarding device forwards the first packet based on the target flow entry. The flow table includes at least one flow entry, the flow entry is a session entry created by the processor of the packet forwarding device based on flow identification information of any received flow, and the target flow entry is a session entry created by the processor of the packet forwarding device based on flow identification information of a first flow to which the first packet belongs.

## Description

This application claims priorities to Chinese Patent Application No. 202210844312.5, filed with the China National Intellectual Property Administration on July 18, 2022 and entitled "PACKET TRANSMISSION METHOD AND APPARATUS", and to Chinese Patent Application No. 202211691427.1, filed with the China National Intellectual Property Administration on December 27, 2022 and entitled "PACKET FORWARDING METHOD, APPARATUS, AND DEVICE, AND CHIP SYSTEM", both of which are incorporated herein by reference in their entireties.

### TECHNICAL FIELD

This application relates to the field of communication technologies, and in particular, to a packet forwarding method, apparatus, and device, and a chip system.

### BACKGROUND

A gateway device is a most common device type in the data communication field, and typically has functions of packet switching, routing, service processing, and so on. A processor (for example, a central processing unit (central processing unit, CPU)) of the gateway device has a general computing capability, but has low computing efficiency for specific services (such as a security (security, SEC) algorithm and packet forwarding). Therefore, a dedicated hardware unit is usually used for these specific services. In other words, computing for these specific services is offloaded from the processor to the dedicated hardware unit, to improve computing efficiency for the services. For example, computing of a SEC service is offloaded from the processor to a dedicated SEC unit. For another example, computing for some packet forwarding services of a flow is offloaded from the processor to an accelerator (dispatch).

When forwarding a packet, the gateway device usually first queries a session table (or referred to as a flow table) based on a received packet, to determine a link status of a session to which the current packet belongs, and performs corresponding processing (for example, forwarding processing) on the packet based on the determined link status. The session table is created by the gateway device based on the 1^{st} packet in a flow. The session table usually records a link status of a link in which the flow is located, and may indicate to perform corresponding processing on a packet in the flow.

However, for a gateway device that offloads computing of some packet forwarding services of a flow from a processor to an accelerator, the processor and the accelerator of the gateway device each need to create and maintain a session table (that is, the gateway device creates and maintains two session tables in total) for packet forwarding processing. Consequently, this causes a waste of memory resources and computing resources of the gateway device.

### SUMMARY

This application provides a packet forwarding method, apparatus, and device, and a chip system. According to the method, the packet forwarding device needs to create and maintain only one flow table, to save storage resources and computing resources of the packet forwarding device.

To achieve the foregoing objective, this application provides the following technical solutions.

According to a first aspect, this application provides a packet forwarding method. The method is applied to a packet forwarding device including a processor and a coprocessor. The method includes: The packet forwarding device receives a first packet, and queries a flow table based on flow identification information carried in the first packet. When a target flow entry matching the flow identification information carried in the first packet exists in the flow table, the coprocessor of the packet forwarding device forwards the first packet based on the target flow entry. The flow table includes at least one flow entry, the flow entry is a session entry created by the processor of the packet forwarding device based on flow identification information of any received flow, and the target flow entry is a session entry created by the processor of the packet forwarding device based on flow identification information of a first flow to which the first packet belongs.

According to the method provided in this application, the coprocessor of the packet forwarding device may forward a packet by accessing the flow table created by the processor. It can be learned that, in the method provided in this application, the packet forwarding device needs to create and maintain only one flow table. In comparison with a case in which the packet forwarding device needs to create and maintain a software table and a hardware table that indicate to forward a packet, in the solution of this application, storage resources and computing resources of the packet forwarding device can be saved.

In a possible design, when the target flow entry does not exist in the flow table, the flow identification information carried in the first packet is used by the processor of the packet forwarding device to create the target flow entry.

According to the possible design, the processor of the packet forwarding device may create a corresponding flow entry based on the 1^{st} packet or the first several packets of the received flow.

In another possible design, the coprocessor of the packet forwarding device is a network processor (network processor, NP), and the processor of the packet forwarding device is a central processing unit (central processing unit, CPU) or an application processor (application processor, AP).

According to the possible design, the coprocessor and the processor in this application may have a plurality of implementation forms. This improves flexibility of application of the solution of this application.

In another possible design, the method further includes: The packet forwarding device determines, using the coprocessor, that aging needs to be performed on the target flow entry, and reports aging information of the target flow entry to the processor using the coprocessor. The aging information of the target flow entry indicates the processor to perform deletion processing on the target flow entry.

In another possible design, the determining, using the coprocessor, that aging needs to be performed on the target flow entry includes: The packet forwarding device polls the flow entry in the flow table using the coprocessor, to determine whether a second packet is received within aging duration, where the second packet carries flow identification information matching the target flow entry. In addition, when determining that no second packet is received within the aging duration, the coprocessor of the packet forwarding device determines that the aging needs to be performed on the target flow entry.

According to the foregoing two possible designs, aging processing on the flow entry in the flow table may be implemented. In this way, the flow table may be updated in time based on a change of a packet flow transmission status (for example, a flow entry of a mouse flow is deleted in time). This can improve utilization of the flow table, and improve packet forwarding efficiency of the packet forwarding device. In addition, the coprocessor of the packet forwarding device first polls the flow table to determine whether the aging processing needs to be performed on the flow entry, and then the processor of the packet forwarding device performs deletion processing on the target flow entry based on the aging information determined by the coprocessor. In this way, the computing resources of the processor of the packet forwarding device can be saved.

In another possible design, a memory of the packet forwarding device includes a ring storage queue, the ring storage queue includes a plurality of storage units distributed in a ring, one storage unit in the ring storage queue is configured to store aging information of one flow entry, and the processor of the packet forwarding device is configured to read aging information stored in a storage unit to which a read pointer points in the ring storage queue. The reporting aging information of the target flow entry to the processor using the coprocessor includes: The packet forwarding device writes, using the coprocessor, the aging information of the target flow entry into a storage unit to which a write pointer points in the ring storage queue, where the write pointer is used to point to an empty storage unit in the ring storage queue.

According to the possible design, in comparison with a case in which the coprocessor compresses and packs information and sends the information to the processor in a form of a packet/data packet, in this design, efficiency of sending the information to the processor by the coprocessor can be improved.

In another possible design, the coprocessor of the packet forwarding device includes a plurality of threads for polling the flow table. If the aging information of the target flow entry is aging information determined by polling the target flow entry in the flow table by using one of the plurality of threads, that the packet forwarding device writes, using the coprocessor, the aging information of the target flow entry into a storage unit to which a write pointer points in the ring storage queue includes: scheduling the plurality of threads using a first scheduler according to a first preset policy, so that respectively determined aging information is sequentially written into the storage unit in the ring storage queue by using the plurality of threads in a sequence indicated by the first preset policy.

According to the possible design, when the coprocessor of the packet forwarding device polls the flow table by using the plurality of threads, a write conflict or a write overflow that occurs when the aging information is simultaneously written into the ring storage queue by using the plurality of threads can be avoided.

In another possible design, the target flow entry includes a first pointer, the first pointer is used to point to storage space for storing first information, the first information includes the flow identification information of the first flow and forwarding information of the first flow, and the forwarding information of the first flow indicates a forwarding type and/or a forwarding action of the first flow.

In another possible design, the first information further includes a second pointer, the second pointer is used to point to storage space for storing second information, the second information includes association data of a newly received packet in the first flow, the association data includes data for collecting statistics on flow information of the first flow, and the flow information of the first flow is used to locate an exception when the exception occurs during transmission of the first flow. When the target flow entry matching the flow identification information carried in the first packet exists in the flow table, the method further includes: The packet forwarding device updates the second information using the coprocessor, where updated second information includes association data of the first packet.

In another possible design, the first information further includes a third pointer, the third pointer is used to point to storage space for storing third information, and the third information includes a control parameter of a process for processing the first flow in the processor of the packet forwarding device.

According to the foregoing several possible designs, different information (for example, the first information, the second information, and the third information) is carried and stored respectively in different information fields, and is linked using a pointer. In this way, it is convenient to design access permission of the coprocessor and the processor for different information subsequently. For example, the second information is created by the processor and then updated by the coprocessor. In this way, an access conflict that occurs when the processor and the coprocessor operate same data can be avoided.

In another possible design, the flow entry in the flow table is stored in preset storage space, and the first information, the second information, and the third information are stored in storage space that the processor of the packet forwarding device applies for from an address pool when the target flow entry is created.

According to the possible design, when the storage space for storing the first information, the second information, and the third information in the packet forwarding device is storage space that the packet forwarding device applies for from a storage pool when the flow entry is created, in comparison with a case in which storage space for storing the flow table is preset storage space with a fixed size in the memory of the packet forwarding device, in this application, the storage space for storing the first information, the second information, and the third information may be released back to the storage pool in time after the first information, the second information, and the third information are deleted, so that the packet forwarding device applies for use when subsequently creating the flow table. This can improve utilization of the storage space of the packet forwarding device.

In another possible design, the flow identification information includes source address information and destination address information of the flow.

In another possible design, the aging information of the target flow entry includes address information of the target flow entry and address information of related information of the target flow entry. The address information of the target flow entry includes an identity (identity, ID) of a target unit in a target hash bucket used to store the target flow entry and a hash address of the target hash bucket in the flow table. The address information of the related information of the target flow entry includes the first pointer in the target flow entry, and the second pointer and the third pointer that are in the first information stored in the storage space to which the first pointer points.

According to the possible design, when the aging information that is of the target flow entry and that is determined by the coprocessor of the packet forwarding device includes the address information of the target flow entry and the address information of the related information of the target flow entry, when performing deletion processing, the processor of the packet forwarding device does not need to consume a resource to determine the aging information. Therefore, the computing resources of the processor can be saved, so that efficiency of processing another service by the processor is improved.

In another possible design, an address stored in each of the first pointer, the second pointer, and the third pointer includes a logical address of the address and a physical address of the address. Alternatively, an address stored in each of the first pointer, the second pointer, and the third pointer includes a logical address of the address and a correspondence between a physical address of the address and the logical address of the address.

According to the possible design, flexibility of implementing the solution of this application can be improved.

In another possible design, data access formats include a big-endian format and a little-endian format. When data access formats preset by the processor and the coprocessor of the packet forwarding device are different, the coprocessor is configured to perform endian conversion on data exchanged between the coprocessor and the processor.

According to the possible design, an error in the data exchanged between the processor and the coprocessor can be avoided.

According to a second aspect, this application provides a packet processing apparatus. The packet forwarding apparatus is configured to perform any method provided in the first aspect. In this application, division into functional modules may be performed on the packet forwarding apparatus according to any method provided in the first aspect. For example, division into each functional module may be performed based on each corresponding function, or two or more functions may be integrated into one processing module. For example, in this application, the packet forwarding apparatus may be divided into a receiving unit, a processing unit, a coprocessing unit, and the like based on functions. For descriptions of possible technical solutions performed by the foregoing functional modules obtained through division and beneficial effects, refer to the technical solutions provided in the first aspect or the corresponding possible designs of the first aspect. Details are not described herein again.

According to a third aspect, this application provides a packet forwarding device. The packet forwarding device includes a processor and a coprocessor. The processor is configured to invoke program instructions stored in a memory, to create a flow entry based on flow identification information of any flow received by the packet forwarding device. Herein, the flow entry indicates the coprocessor to forward a packet. The coprocessor is configured to invoke program instructions stored in the memory, to forward a first packet according to any method provided in the first aspect after the packet forwarding device receives the first packet.

According to a fourth aspect, this application provides a chip system. The chip system includes a processor and a coprocessor. The processor is configured to create a flow entry based on flow identification information of any received flow. Herein, the flow entry indicates the coprocessor to forward a packet. The coprocessor is configured to forward a first packet according to any method provided in the first aspect after the first packet is received.

According to a fifth aspect, this application provides a computer-readable storage medium. The computer-readable storage medium includes program instructions. When the program instructions are run on a computer, the computer is enabled to perform any method provided in any possible implementation of the first aspect.

According to a sixth aspect, this application provides a computer program product. When the computer program product runs on a packet forwarding device, any method provided in any possible implementation of the first aspect is performed.

It may be understood that any one of the apparatus, the device, the computer storage medium, the computer program product, the chip system, and the like provided above may be used in the corresponding method provided above. Therefore, for beneficial effects that can be achieved by any one of the apparatus, the device, the computer storage medium, the computer program product, the chip system, and the like, refer to beneficial effects in the corresponding method. Details are not described herein again.

In this application, names of the packet forwarding apparatus and the packet forwarding device constitute no limitation on the devices or the functional modules. In actual implementation, these devices or functional modules may be named differently. All devices or functional modules fall within the scope defined by the claims and their equivalent technologies in this application, provided that functions of the devices or functional modules are similar to that described in this application.

### BRIEF DESCRIPTION OF DRAWINGS

FIG. 1 is a diagram of a structure of a packet forwarding device according to an embodiment of this application;
FIG. 2 is a diagram of a storage structure of a flow entry in a flow table according to an embodiment of this application;
FIG. 3 is a diagram of a structure of a first flow entry corresponding to a first packet flow according to an embodiment of this application;
FIG. 4 is a schematic flowchart of a packet forwarding method according to an embodiment of this application;
FIG. 5 is a schematic flowchart of another packet forwarding method according to an embodiment of this application;
FIG. 6 is a diagram of a process in which a packet forwarding device creates a target flow entry according to an embodiment of this application;
FIG. 7 is a diagram of a manner in which a packet forwarding device accesses a flow entry according to an embodiment of this application;
FIG. 8 is a diagram of a process of performing aging processing on a flow entry according to an embodiment of this application;
FIG. 9 is a diagram of a structure of a ring storage queue according to an embodiment of this application; and
FIG. 10 is a diagram of a structure of a packet forwarding apparatus 100 according to an embodiment of this application.

### DESCRIPTION OF EMBODIMENTS

To understand embodiments of this application more clearly, the following describes some terms or technologies in embodiments of this application.

### (1) Flow

In embodiments of this application, the flow is also referred to as a packet flow. The packet flow is a flow including packets with a same source address, a same destination address, and a same transmission protocol, or a flow including packets with a same source address, a same source port number, a same destination address, a same destination port number, and a same transmission protocol.

### (2) Flow table

To improve packet forwarding efficiency, currently, a connection "status"-based mechanism is usually used to control packet forwarding. Specifically, a packet forwarding device (for example, a gateway device) detects the 1^{st} packet or first few several packets of the packet flow, to determine a status of a connection for transmission of the packet flow, and then creates, in the flow table, a flow entry corresponding to the packet flow. The flow table (which may also be referred to as a session table) is used to record the status of the connection for transmission of the packet flow. In this way, the packet forwarding device may forward a large quantity of subsequent packets of the packet flow based on the status of the connection of the packet flow recorded in the flow entry in the flow table.

The flow table usually includes a plurality of flow entries, and different flow entries in the flow table correspond to different packet flows, and are used to guide different packet flows for packet forwarding. Because address information of the packet flow can identify the packet flow, a correspondence between the flow entry and the packet flow may be marked by using address information of the packet flow in the flow entry. The address information of the packet flow includes address information of a transmitter and a receiver of the packet flow. In an example, the address information of the packet flow may be a 5-tuple of the packet flow, and the 5-tuple includes a source address, a source port number, a destination address, a destination port number, and a transmission protocol that are of the packet flow. In another example, the address information of the packet flow may alternatively be a 3-tuple of the packet flow, and the 3-tuple includes a source address, a destination address, and a transmission protocol that are of the packet flow. In still another example, the address information of the packet flow may be a 7-tuple of the packet flow, and the 7-tuple includes a source address, a source port number, a destination address, a destination port number, and a transmission protocol of the packet flow, an identity (identity, ID) of an interface for receiving a packet, and a processing priority of the packet flow.

### (3) Data access format

Herein, the data access format is an access format of data in a memory. Data access formats include a big-endian (big endian) format and a little-endian (little endian) format. The big-endian format is that a low-order bit (byte/bit) is stored in a high address, and a high-order bit (byte/bit) is stored in a low address. The little-endian format is that a low-order bit (byte/bit) is stored in a low address, and a high-order bit (byte/bit) is stored in a high address.

In an example, for addresses 0x4000 and 0x4001 in the memory, it is assumed that 0x4000 is a low address and 0x4001 is a high address. In this case, for data 0x1234 (where 0x represents a hexadecimal number system), in the case that the data is stored in the big-endian format and the little-endian format, byte sequences of the data are shown in Table 1.

**Table 1**

| | 0x4000 | 0x4001 |
|---|---|---|
| Big-endian format | 0x12 | 0x34 |
| Little-endian format | 0x34 | 0x12 |

Because the big-endian format and the little-endian format are different, for same data, a device needs to use a same data access format when writing the data into the memory and reading the data from the memory. Otherwise, a data read error occurs.

### (4) Other terms

In embodiments of this application, the terms "first" and "second" do not indicate a sequence relationship, but are intended to distinguish between different objects, and cannot be understood as an indication or implication of relative importance or an implicit indication of a quantity or a sequence of indicated technical features.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In practice, when the packet forwarding device forwards a packet, a processor (for example, a CPU or an application processor (application processor, AP)) of the packet forwarding device may process a packet forwarding service. To improve the packet forwarding efficiency, after creating, in the flow table, a flow entry that indicates to forward a packet flow, the packet forwarding device may offload computing of a forwarding service of a subsequent packet of the packet flow from the processor of the packet forwarding device to a coprocessor (for example, a network processor (network processor, NP)). Herein, the coprocessor is configured to cooperate with the processor of the packet forwarding device to complete the forwarding service of the packet flow. In this scenario, the flow table created by the packet forwarding device includes a software table created by the processor of the packet forwarding device, and includes a hardware table created by the coprocessor of the packet forwarding device.

A flow entry in the hardware table is created by the coprocessor based on related information of some flow entries in the software table delivered by the processor. In addition, the software table created by the processor includes flow entries corresponding to all packet flows that need to be forwarded by the packet forwarding device, and the hardware table created by the coprocessor includes only flow entries corresponding to some packet flows that need to be forwarded by the packet forwarding device. In other words, the entry that is created by the packet forwarding device and that indicates to forward a packet flow exists in the software table, but does not necessarily exist in the hardware table. Alternatively, it is understood that all content included in the flow entry of the hardware table exists in the software table, that is, some content of the software table is duplicate with the content of the hardware table. In this way, the coprocessor of the packet forwarding device forwards a received packet by accessing the hardware table created by the coprocessor. For a packet flow that cannot be forwarded by the coprocessor (that is, a flow entry corresponding to the packet flow does not exist in the hardware table), the processor of the packet forwarding device forwards a packet in the packet flow by accessing the software table created by the processor.

However, when the software table and the hardware table that have duplicate content are stored in the packet forwarding device, storage resources of the packet forwarding device are wasted consequently. When the packet forwarding device separately maintains the software table and the hardware table that have the duplicate content, computing resources of the packet forwarding device are also wasted consequently.

Based on this, embodiments of this application provide a packet forwarding method, applied to a packet forwarding device that includes a processor and a coprocessor. In the method provided in embodiments of this application, after the processor of the packet forwarding device creates, in a flow table, a flow entry corresponding to a packet flow, for example, creates, in the flow table, a target flow entry corresponding to a first flow, the coprocessor of the packet forwarding device can directly access the target flow entry in the flow table to complete forwarding of a subsequent packet of the first flow. The coprocessor of the packet forwarding device is configured to cooperate with the processor of the packet forwarding device to implement a forwarding service of the packet flow. The subsequent packet of the first flow is a packet in the first flow other than a packet used to create a flow entry corresponding to the first flow. It can be learned that, in the method provided in embodiments of this application, the packet forwarding device needs to create and maintain only one flow table. In comparison with a case in which the packet forwarding device needs to create and maintain a software table and a hardware table that indicate to forward a packet, in the method provided in embodiments of this application, storage resources and computing resources of the packet forwarding device can be saved.

Embodiments of this application further provide a packet forwarding device. The packet forwarding device is configured to perform the packet forwarding method provided in embodiments of this application. The packet forwarding device may be any device that has a packet forwarding capability. A type of a packet forwarded by the packet forwarding device is not particularly limited in embodiments of this application. For example, the packet forwarded by the packet forwarding device may be a transmission control protocol (transmission control protocol, TCP) packet, a user datagram protocol (user datagram protocol, UDP) packet, or an internet control message protocol (internet control message protocol, ICMP) packet. This is not limited thereto.

In an example, the packet forwarding device may be a device that has the packet forwarding capability, for example, a gateway device, a router, a switch, a security device (for example, a firewall device), a network address translation (network address translation, NAT) device, or a value-added service card. A specific form of the packet forwarding device is not specifically limited in embodiments of this application.

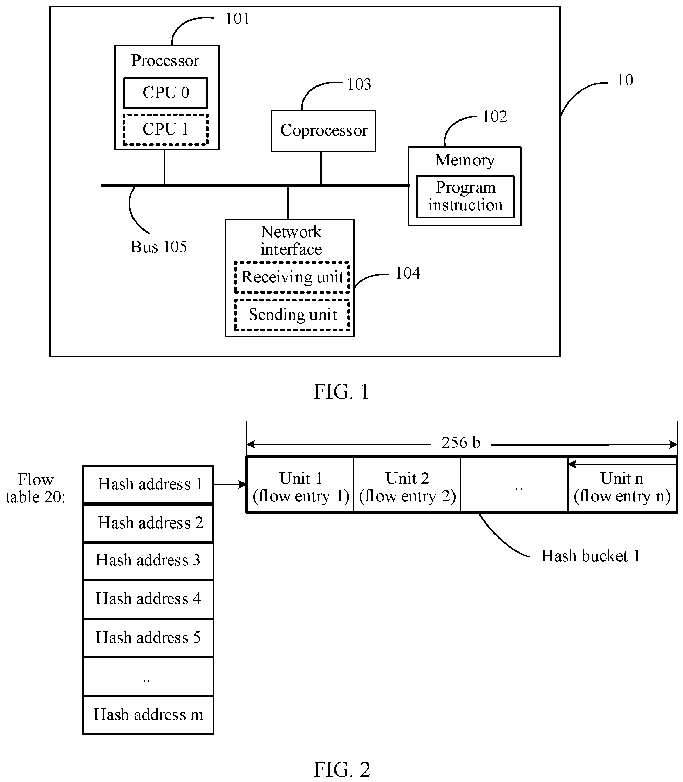

FIG. 1 is a diagram of a structure of a packet forwarding device according to an embodiment of this application. As shown in FIG. 1, the packet forwarding device 10 includes a processor 101, a memory 102, a coprocessor 103, a network interface 104, and a bus 105. The processor 101, the memory 102, the coprocessor 103, and the network interface 104 are connected through the bus 105.

The processor 101 is a control center of the packet forwarding device 10, and may be a general-purpose CPU. Alternatively, the processor 101 may be another general-purpose processor, a digital signal processor (digital signal processor, DSP), an application-specific integrated circuit (application-specific integrated circuit, ASIC), a field-programmable gate array (field-programmable gate array, FPGA), another programmable logic device, a discrete gate, a transistor logic device, a discrete hardware component, a graphics processing unit (graphics processing unit, GPU), a neural processing unit (neural processing unit, NPU), a tensor processing unit (tensor processing unit, TPU), an artificial intelligence (artificial intelligence) chip, a data processing unit (data processing unit, DPU), an AP, or the like.

In an example, the processor 101 includes one or more CPUs such as a CPU 0 and a CPU 1 shown in FIG. 1. In addition, a quantity of processor cores in each processor is not limited in this application.

The memory 102 is configured to store program instructions or data (for example, a flow table described in this embodiment of this application) to be accessed by an application process. The processor 101 may execute the program instructions in the memory 102 to implement the packet forwarding method provided in embodiments of this application.

The memory 102 includes a volatile memory or a non-volatile memory, or may include both a volatile memory and a non-volatile memory. The volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that can be directly addressed and accessed by the CPU, and is used as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The non-volatile memory may be a storage class memory (storage class memory, SCM), a solid-state drive (solid-state drive, SSD), a hard disk drive (hard disk drive, HDD), or the like. The storage class memory may be, for example, a non-volatile memory (non-volatile memory, NVM), a phase-change memory (phase-change memory, PCM), or a persistent memory.

In a possible implementation, the memory 102 exists independently of the processor 101. The memory 102 is connected to the processor 101 through the bus 105, and is configured to store data, instructions, or program code. When the processor 101 invokes and executes the instructions or the program code stored in the memory 102, the packet forwarding method provided in embodiments of this application can be implemented.

In another possible implementation, the memory 102 and the processor 101 are integrated together.

The coprocessor 103 is configured to offload a part of a packet forwarding function of the processor 101, to cooperate with the processor 101 to implement a forwarding service of a packet flow. For example, in this embodiment of this application, after the processor 101 creates a corresponding flow entry for a packet flow, the coprocessor 103 may access the flow entry to forward a subsequent packet of the packet flow. In this way, the processor 101 does not need to perform forwarding processing on the subsequent packet of the packet flow, so that some computing resources can be saved, and the saved computing resources may be used for processing of another service of the processor 101, to improve efficiency of processing the service. In addition, because energy efficiency of processing a packet forwarding service by the coprocessor 103 is usually greater than energy efficiency of processing a packet forwarding service by the processor 101, packet forwarding efficiency can be improved when a packet flow for which a flow entry has been created is forwarded by the coprocessor 103.

In an example, the coprocessor 103 may be an accelerator, an NP, or the like, or the coprocessor 103 may be any ASIC, FPGA, another programmable logic device, discrete gate, DPU, or the like that has a packet forwarding function. A specific implementation form of the coprocessor 103 is not particularly limited in this embodiment of this application.

Optionally, the processor 101 and the coprocessor 103 may be integrated on different boards, or integrated on a same board. This is not limited. When the processor 101 and the coprocessor 103 are integrated on a same board, the processor 101 and the coprocessor 103 belong to a same system on chip (system on chip, SoC).

The network interface 104 is configured for a connection between the packet forwarding device 10 and another device (for example, a device that sends a packet to the network forwarding device 10) over a communication network. The communication network may be Ethernet, a radio access network (radio access network, RAN), a wireless local area network (wireless local area network, WLAN), or the like. The network interface 104 includes a receiving unit configured to receive data/a packet, and a sending unit configured to send data/a packet.

The bus 105 may be an industry standard architecture (industry standard architecture, ISA) bus, a peripheral component interconnect (peripheral component interconnect, PCI) bus, a high-speed serial computer extended bus (peripheral component interconnect express, PCIe), a compute express link (compute express link, CXL) bus, an extended industry standard architecture (extended industry standard architecture, EISA) bus, or the like. The bus may be classified into an address bus, a data bus, a control bus, and the like. For ease of representation, only one bold line is used for representation in FIG. 1, but this does not mean that there is only one bus or only one type of bus.

It should be noted that the structure shown in FIG. 1 does not constitute a limitation on the packet forwarding device 10. In addition to the components shown in FIG. 1, the packet forwarding device 10 includes more or fewer components than those shown in FIG. 1, combines some components, or has different component arrangements.

**The following describes, with reference to the accompanying drawings, the packet forwarding method provided in embodiments of this application.**

**First, a flow table in the packet forwarding method provided in embodiments of this application is described.**

In embodiments of this application, the flow table includes at least one flow entry (or referred to as a session entry). For any flow entry in the flow table, the flow entry is a session entry created by a processor of a packet forwarding device based on flow identification information of a packet flow corresponding to the flow entry, and the flow entry indicates the packet forwarding device to forward a subsequent packet of the packet flow corresponding to the flow entry. For detailed descriptions of creating the flow entry by the processor of the packet forwarding device, refer to the following descriptions of S201 to S207. Details are not described herein.

The flow identification information of the packet flow is information that can identify one packet flow. In an example, the flow identification information of the packet flow may be address information of the packet flow, and the address information of the packet flow includes source address information and destination address information of the packet flow. Specifically, the address information of the packet flow may be a 3-tuple, a 5-tuple, a 7-tuple, or the like that is carried in a packet of the packet flow. For detailed descriptions, refer to the foregoing descriptions. Details are not described herein again.

It should be noted that, when the 1^{st} packet of the packet flow carries complete flow identification information of the packet flow, the processor of the packet forwarding device may create, in the flow table based on the 1^{st} packet of the packet flow, a flow entry corresponding to the packet flow. When the flow identification information carried in the 1^{st} packet of the packet flow is incomplete, the processor of the packet forwarding device needs to create, in the flow table based on a plurality of packets that carry complete flow identification information of the packet flow, a flow entry corresponding to the packet flow. Herein, the plurality of packets are a plurality of packets including the 1^{st} packet of the packet flow.

In an example, the flow identification information of the packet flow is the address information of the packet flow. Because the 1^{st} packet of the packet flow transmitted based on a tunneling protocol carries only a part of the address information of the packet flow, the processor of the packet forwarding device needs to create, in the flow table based on a plurality of packets that carry complete address information of the packet flow, a flow entry corresponding to the packet flow.

Optionally, a specific form of the flow table is a hash table. A hash address of the flow entry corresponding to the packet flow in the flow table may be represented by a hash value corresponding to the packet flow. For example, a hash address HT_ADDR of the flow entry in the flow table may be: HT_ADDR=HT_BASE_ADDR+CRC_Result, where HT_BASE_ADDR represents the 1^{st} address of the flow table, and CRC_Result represents a hash value corresponding to the packet flow. For another example, to increase a discrete effect of the hash address, a modulo operation may be performed on the hash value that is obtained through calculation and that corresponds to the packet flow. In this case, a hash address HT_ADDR of the flow entry in the flow table may be: HT_ADDR=HT_BASE_ADDR+modulo result of CRC_Result, where the modulo result of CRC_Result may be a result of performing a modulo operation on complete CRC_Result, or may be a result of performing a modulo operation on a part of a data bit field in CRC_Result, where the part of the data bit field herein is, for example, a high bit field, a low bit field, or a middle bit field. This is not limited.

The hash value corresponding to the packet flow may be a hash value of the flow identification information that can identify the packet flow. Specifically, the hash value may be a hash value obtained by the packet forwarding device by performing hash calculation on the flow identification information of the packet flow based on a preset hash algorithm when a target flow entry is created. The preset hash algorithm may be any hash algorithm. This is not limited in embodiments of this application.

It should be noted that hash values obtained by performing hash calculation on flow identification information of a plurality of packet flows, that is, on a plurality of different pieces of flow identification information by using the preset hash algorithm may be the same. In this case, hash addresses of flow entries corresponding to the plurality of packet flows in the flow table are the same. Therefore, a hash bucket is configured for each hash address in the flow table, and the hash bucket includes a plurality of units (units). The plurality of units may be configured to store flow entries corresponding to different packet flows with a same hash value, and one unit is configured to store one flow entry. In other words, when a same hash value is obtained by performing calculation on the flow identification information of the plurality of packet flows by using the preset hash algorithm, where a hash address represented by the hash value in the flow table corresponds to one hash bucket, each of the flow entries corresponding to the plurality of packet flows is stored in a different unit in the hash bucket.

It may be understood that quantities of units included in hash buckets configured for different hash addresses in the flow table may be the same or different. This is not limited. In addition, a specific quantity of units included in the hash bucket is not specifically limited in embodiments of this application. For example, one hash bucket may include four units, eight units, 16 units, or 64 units. In addition, in practice, a size of storage space occupied by one hash bucket may be set to 256 bits (bits, b). This is not limited thereto.

In an example, FIG. 2 is a diagram of a storage structure of a flow entry in a flow table according to an embodiment of this application. As shown in FIG. 2, a flow table 20 includes m hash addresses: a hash address 1 to a hash address m, and the m hash addresses are represented by m hash values, where m is a positive integer.

For the hash address 1, a hash bucket 1 is configured for the hash address 1. A size of the hash bucket 1 is 256 b. The hash bucket 1 includes n units: a unit 1 to a unit n in total, and each unit is configured to store one flow entry, where n is a positive integer. When hash values respectively obtained by performing calculation on flow identification information of a packet flow 1, flow identification information of a packet flow 2, ..., and flow identification information of a packet flow n by using the preset hash algorithm are the same, and a hash address represented by the hash value is the hash address 1 in the flow table 20, a flow entry 1 corresponding to the packet flow 1, a flow entry 2 corresponding to the packet flow 2, ..., and a flow entry n corresponding to the packet flow n are respectively stored in units of the hash bucket 1 configured for the hash address 1. For example, the flow entry 1 is stored in the unit 1 of the hash bucket 1, the flow entry 2 is stored in the unit 2 of the hash bucket 1, ..., and the flow entry n is stored in the unit n of the hash bucket 1.

In this embodiment of this application, storage space for storing the flow table in the packet forwarding device is preset storage space with a fixed size, and a quantity of flow entries included in the flow table is a fixed preset quantity. The storage space for storing the flow table in the packet forwarding device is a segment of continuous storage space allocated by the packet forwarding device in a memory of the packet forwarding device. The memory is, for example, the memory 102 shown in FIG. 1. This is not limited. In an example, it is assumed that the flow table includes 1000 hash addresses, a hash bucket configured for each hash address includes eight units, and the eight units can store eight flow entries. Therefore, a maximum quantity of flow entries included in the flow table is 1000×8, that is, 8000. The 8000 flow entries may be used to guide packet forwarding of 8000 packet flows. In addition, it is assumed that the storage space occupied by the flow table is 8 gigabytes (gigabytes, GB). In this case, the packet forwarding device pre-allocates continuous space of 8 GB in a DDR memory to store the flow table.

In some possible examples, the packet forwarding device may create a plurality of flow tables. For example, the packet forwarding device creates two flow tables: a first flow table and a second flow table. In this way, when forwarding a packet based on the flow table, the packet forwarding device may first access the first flow table, to search for a flow entry used to forward the packet. When the packet forwarding device does not find the flow entry in the first flow table, the packet forwarding device queries the second flow table for the flow entry. In this manner, a capacity of the flow table can be increased, and a probability of some hash conflicts can be reduced. Herein, the hash conflict is that hash addresses obtained through calculation based on flow identification information of different packet flows are the same.

**The following describes a structure of the flow entry in the flow table.**

With reference to FIG. 2, an example in which a flow entry corresponding to a first packet flow is a first flow entry, and the first flow entry is stored in the unit 1 shown in FIG. 2 is used to describe the structure of the flow entry in the flow table provided in this embodiment of this application. In this embodiment of this application, the flow entry in the flow table is created by the processor of the packet forwarding device, and the created flow entry is configured as follows: The processor of the packet forwarding device can read and delete the flow entry, and a coprocessor of the packet forwarding device only reads the flow entry. In this way, a type of an access operation (for example, an access operation such as reading, writing, or deleting) performed by the processor and the coprocessor on the flow entry is limited, so that an access conflict on the flow entry can be avoided. Therefore, an access lock does not need to be added to the flow entry.

Specifically, the first flow entry includes a compression value corresponding to the first packet flow, and the compression value is specifically a compression value obtained by performing calculation on flow identification information of the first packet flow by using a preset compression algorithm. Herein, the preset compression algorithm is any compression algorithm, and the preset compression algorithm is used to compress the flow identification information of the first packet flow from a long data bit to a small data bit. For example, 64-bit data used to represent the flow identification information of the first packet flow is compressed into 8-bit data. In an example, the preset compression algorithm may be any hash algorithm or any folding algorithm (for example, an exclusive OR folding algorithm). This is not limited thereto.

It should be noted that the preset compression algorithm herein and the preset hash algorithm described above may be a same algorithm, or may be different algorithms. This is not limited.

A location of the hash bucket for storing the flow entry is determined based on the hash value obtained by performing calculation on the flow identification information of the packet flow by using the preset hash algorithm, and the compression value included in the flow entry is obtained by performing calculation on the flow identification information of the packet flow by using the preset compression algorithm. Therefore, for the first packet flow, the first flow entry corresponding to the first packet flow is located by using a hash value and a compression value that correspond to the first packet flow. Therefore, when the hash value and the compression value that correspond to the first packet flow are different, a probability that a same hash value is obtained by performing the preset hash algorithm on different flow identification information, and compression values obtained by performing calculation on the different flow identification information by using the preset compression algorithm are also the same can be greatly reduced, so that during packet forwarding, a case in which the packet is incorrectly forwarded because an incorrect flow entry is found in the flow table based on the hash value and the compression value that are obtained by performing calculation on the flow identification information carried in the packet can be avoided.

The preset hash algorithm and the preset compression algorithm may be configured as different algorithms, so that the hash value and the compression value that correspond to the packet flow are different. In an example, the preset hash algorithm may be a cyclic redundancy check (Cyclic Redundancy Check, CRC) 32 algorithm, and the preset compression algorithm is an exclusive OR folding algorithm. Alternatively, the hash value may be obtained by performing calculation on the flow identification information of the packet flow by using the preset hash algorithm, and a part of a bit field in the hash value may be used as the compression value corresponding to the packet flow, so that a hash value and a compression value of a same packet flow are different. In this case, it is equivalent to a case in which the preset hash algorithm and the preset compression algorithm are the same.

For example, both the preset hash algorithm and the preset compression algorithm are CRC-32 algorithms, and the flow identification information of the packet flow is a complete 5-tuple (full key, FKEY) carried in a packet in the packet flow. In an example, a hash value CRC_Result corresponding to the packet flow may be a result obtained by performing calculation on the FKEY of the packet flow by using the CRC-32 algorithm, that is, CRC_Result=hash_function (FKEY), and a compression value (compress key) corresponding to the packet flow may be a low bit or a high bit of the hash value CRC_Result. In another example, to improve discreteness of the hash value and the compression value that correspond to the packet flow, the hash value corresponding to the packet flow may be a result of performing a modulo operation on the high bit of the CRC_Result, and the compression value corresponding to the packet flow may be a result of performing a modulo operation on the low bit of the CRC_Result.

It should be noted that the foregoing descriptions of a manner of calculating the hash value and the compression value that correspond to the packet flow are merely examples for description. It should be understood that any algorithm that can compress the flow identification information of the packet flow and obtain different compression results (where the foregoing hash calculation for obtaining the hash value may also be understood as a manner of compressing data) falls within the protection scope of this embodiment of this application.

The first flow entry corresponding to the first packet flow further includes a first pointer, and the first pointer is used to point to storage space for storing first information of the first packet flow. In other words, for storage space to which a first pointer in any flow entry points, the storage space is used to store first information of a packet flow corresponding to the flow entry. For example, if a flow entry corresponding to the packet flow 1 is the flow entry 1, storage space to which a first pointer in the flow entry 1 points is used to store first information of the flow entry 1.

The first pointer includes an address (for example, the 1^{st} address) of the storage space to which the first pointer points. The processor of the packet forwarding device usually accesses the storage space by using a logical address of the storage space. The coprocessor of the packet forwarding device usually accesses the storage space by using a physical address of the storage space. In addition, it is assumed that the storage space for storing the first information is first storage space. Therefore, to enable both the processor and the coprocessor of the packet forwarding device to access the first information in the first storage space, in a possible case, an address stored in the first pointer includes a logical address of the address and a physical address of the address. In another possible case, an address stored in the first pointer includes a logical address of the address and a correspondence between a physical address of the address and the logical address of the address. The correspondence is, for example, an offset between the physical address and the logical address. This is not limited. In this way, when the coprocessor of the packet forwarding device needs to access the first storage space, the coprocessor of the packet forwarding device may determine, based on the logical address and the correspondence between the physical address and the logical address in the first pointer, the physical address of the address stored in the first pointer, and then access the first storage space based on the determined physical address. In still another possible case, an address stored in the first pointer includes a logical address of the address. In this case, the coprocessor of the packet forwarding device also accesses, by using the logical address, the storage space to which the first pointer points, and translation rules of the processor and the coprocessor of the packet forwarding device for a physical address and a virtual address are the same.

The first information of the first packet flow includes complete flow identification information of the first packet flow and forwarding information of the first packet flow. It should be noted that, in this embodiment of this application, after the first information is written into the corresponding storage space by the processor of the packet forwarding device, the first information is configured as follows: The processor of the packet forwarding device can read and delete the first information, and the coprocessor of the packet forwarding device only reads the first information. In this way, a type of an access operation performed by the processor and the coprocessor on the first information is limited, so that an access conflict on the first information can be avoided. Therefore, an access lock does not need to be added to the first information.

The complete flow identification information of the first packet flow may be flow identification information obtained, when the first flow entry is created, by the processor of the packet forwarding device from the received 1^{st} packet of the first packet flow or a plurality of packets including the 1^{st} packet. For detailed descriptions of the complete flow identification information of the first packet flow, refer to the foregoing descriptions. Details are not described again. Optionally, the flow identification information of the first packet flow may be address information of the first packet flow. In an example, the flow identification information of the first packet flow is a 5-tuple carried in the packet in the first packet flow.

The forwarding information of the first packet flow indicates a forwarding type, a forwarding action, and/or the like of the first packet flow. The forwarding type includes routing table forwarding, NAT forwarding, or the like. This is not limited thereto. The forwarding action includes searching for a next hop, collecting statistics on flow information, limiting a rate, or the like. This is not limited thereto. It may be understood that the forwarding information of the first packet flow may be determined by the packet forwarding device based on a detected connection status of the first packet flow and a preset forwarding policy when the first flow entry is created. Details are not described herein.

Optionally, the first information of the first packet flow further includes a second pointer, and the second pointer is used to point to storage space for storing second information of the first packet flow. In other words, for storage space to which a second pointer in any flow entry points, the storage space is used to store second information of a packet flow corresponding to the flow entry. For example, if a flow entry of the packet flow 1 is the flow entry 1, storage space to which a second pointer in the flow entry 1 points is used to store second information of the packet flow 1.

The second pointer includes an address (for example, the 1^{st} address) of the storage space to which the second pointer points. For descriptions of a specific form of an address stored in the second pointer, refer to the foregoing descriptions of the address stored in the first pointer. Details are not described herein again.

The second information of the first packet flow includes association data of a packet (which is referred to as a newly received packet for short below) that is in the first packet flow and that is newly received by the packet forwarding device. Optionally, the association data of the newly received packet includes one or more of a quantity of data packets in the packet, a quantity of bytes included in all data packets in the packet, receiving time of the packet, or a TCP flag carried in the packet. Certainly, the association data of the newly received packet may further include more related information of the packet. This is not limited.

Specifically, the association data of the newly received packet may be used by the packet forwarding device to collect statistics on flow information of the first packet flow, and the flow information of the first packet flow is used by the packet forwarding device to locate an exception when the exception occurs during transmission of the first packet flow. In other words, the packet forwarding device can monitor a transmission status of the first packet flow based on the flow information that is of the first packet flow and that is obtained through statistics collection, to accurately locate the exception when the exception occurs in the transmission of the first packet flow. In an example, the flow information of the first packet flow may include a quantity of currently transmitted data packets in the first packet flow and/or a transmission interval of adjacent packets in the first packet flow. This is not limited thereto. The quantity of currently transmitted data packets in the first packet flow may be obtained by calculating a sum of quantities of data packets in association data of all received packets in the first packet flow. The transmission interval of the adjacent packets in the first packet flow may be obtained by calculating a difference between receiving time of packets in association data of adj acent packets in the received packets in the first packet flow. In addition, a location at which the exception occurs is a location of a packet in which a transmission exception occurs in the first packet flow. In an example, the location may be represented by, but is not limited to, a sequence number of the packet.

It should be noted that, in this embodiment of this application, after the second information is written into the corresponding storage space by the processor of the packet forwarding device for the first time when the flow entry is created, the second information is configured as follows: The processor of the packet forwarding device reads and deletes the second information, and the coprocessor of the packet forwarding device can read and write the second information. In other words, the second information is maintained by the coprocessor after being written into the corresponding storage space by the processor for the first time. In this way, a type of an access operation and an occasion of the access operation performed by the processor and the coprocessor on the second information are limited, so that an access conflict on the second information can be avoided. Therefore, an access lock does not need to be added to the second information.

In addition, for example, a sum of a size of the storage space of the first information of the first packet flow and a size of the storage space of the second information of the first packet flow may be usually set to a value ranging from 512 b to 1 kilobit (kilobit, kb). This is not limited.

The first information of the first packet flow further includes a third pointer, and the third pointer indicates storage space for storing third information of the first packet flow. In other words, for storage space to which a third pointer in any flow entry points, the storage space is used to store third information of a packet flow corresponding to the flow entry. For example, if a flow entry of the packet flow 1 is the flow entry 1, storage space to which a third pointer in the flow entry 1 points is used to store third information of the packet flow 1.

The third pointer may include an address (for example, the 1^{st} address) used for the storage space to which the third pointer points. For descriptions of a specific form of an address stored in the third pointer, refer to the foregoing descriptions of the address stored in the first pointer. Details are not described herein again.

The third information of the first packet flow includes a control parameter of a process for processing the first packet flow and that is run in the processor of the packet forwarding device. In an example, the third information of the first packet flow includes process software that processes the first packet flow in the processor or an instance ID that controls the process, and includes some indication information of a control plane. Details are not described herein. The indication information of the control plane is, for example, indication information indicating whether some services in which the first packet flow is involved are allowed to be delivered to the coprocessor for processing. This is not limited thereto.

It should be noted that, in this embodiment of this application, after the third information is written into the corresponding storage space by the processor of the packet forwarding device for the first time when the flow entry is created, the third information is configured as follows: The processor of the packet forwarding device can read, write, and delete the third information, and the third information is invisible to the coprocessor of the packet forwarding device. Therefore, for the third information, no access conflict exists between the processor and the coprocessor, and an access lock does not need to be added to the third information.

In addition, for example, the storage space of the third information of the first packet flow may be usually set to 256 bytes (bytes, B) to 512 B. This is not limited.

It should be noted that, in this embodiment of this application, the storage space for storing the first information, the second information, and the third information of the first packet flow in the packet forwarding device may be storage space with a fixed size that is pre-allocated by the packet forwarding device to each flow entry in the memory of the packet forwarding device, or storage space that the packet forwarding device applies for from a storage pool when the flow entry is created. This is not limited.

When the storage space for storing the first information, the second information, and the third information in the packet forwarding device is the storage space that the packet forwarding device applies for from the storage pool when the flow entry is created, in comparison with a case in which storage space for storing the flow table is preset storage space with a fixed size in the memory of the packet forwarding device, the storage space for storing the first information, the second information, and the third information may be released back to the storage pool in time after the first information, the second information, and the third information are deleted, so that the packet forwarding device applies for use when subsequently creating the flow table. For details, refer to the following descriptions of creating a target flow entry in S201 to S207. Details are not described herein.

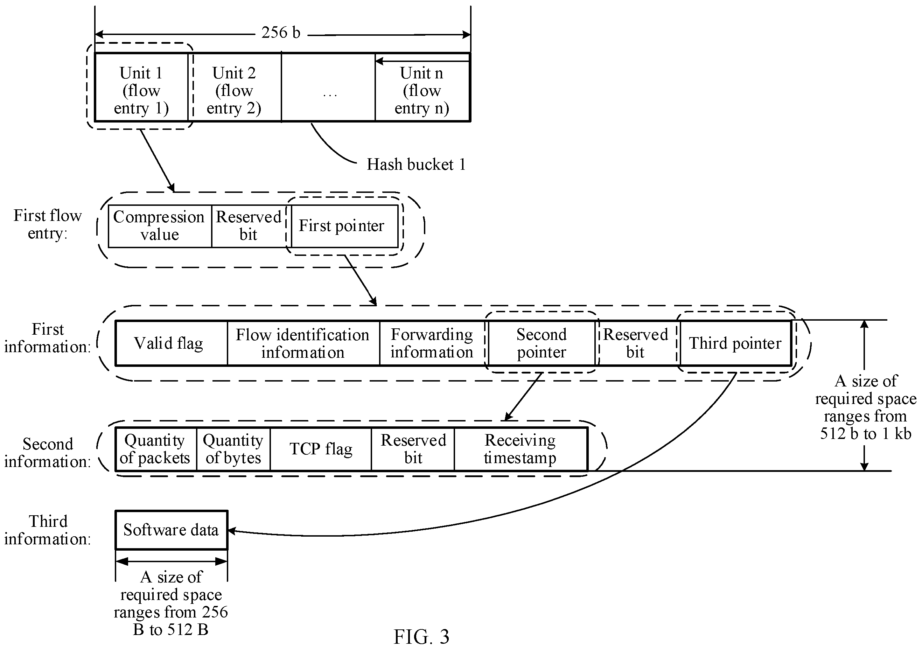

In an example, with reference to FIG. 2, FIG. 3 is a diagram of a structure of a first flow entry corresponding to a first packet flow according to an embodiment of this application.

As shown in FIG. 3, the first flow entry includes a compression value, a first pointer, and a reserved bit. The compression value is a compression value corresponding to the first packet flow, and the first pointer is used to point to storage space for storing first information of the first packet flow. For related detailed descriptions, refer to the foregoing descriptions. Details are not described again. The reserved bit is a field reserved for use in the first flow entry.

As shown in FIG. 3, the first information includes a valid flag, flow identification information, forwarding information, a second pointer, a third pointer, and a reserved bit. The flow identification information is flow identification information of the first packet flow, the forwarding information is forwarding information of the first packet flow, the second pointer is used to point to storage space for storing second information of the first packet flow, and the third pointer is used to point to storage space for storing third information of the first packet flow. For related detailed descriptions, refer to the foregoing descriptions. Details are not described again. In addition, the valid flag in the first information indicates that the first information is valid information, and the reserved bit is a field reserved for use in the first information.

As shown in FIG. 3, the second information of the first packet flow includes a quantity of packets, a quantity of bytes, a TCP flag, a reserved bit, and a receiving timestamp. It is assumed that a packet that is in the first packet flow and that is newly received by the packet forwarding device is a packet 1. In this case, the quantity of packets in the second information is a quantity of data packets in the packet 1, the quantity of bytes is a quantity of bytes included in all data packets in the packet 1, the TCP flag is a TCP flag carried in the packet 1, and the receiving timestamp is a timestamp that represents receiving time of the packet 1. For related detailed descriptions, refer to the foregoing descriptions. Details are not described again. In addition, the reserved bit in the second information is a field reserved for use in the second information. In addition, a size of storage space required by the packet forwarding device to store the first information and the second information in FIG. 3 may be set to a value ranging from 512 b to 1 kb, and is specifically determined based on a size of data included in the first information and the second information. This is not limited in this embodiment of this application.

As shown in FIG. 3, the third information is software data, and specifically includes a control parameter of a process for processing the first packet flow and that is run in the processor of the packet forwarding device. Details are not described again. The storage space of the third information shown in FIG. 3 may be set to a value ranging from 256 B to 512 B. This is not limited.

The following uses an example in which two flow tables are created by the packet forwarding device to describe a size of storage space required by a flow entry structure provided in this embodiment of this application.

For example, flow tables created by the packet forwarding device include a flow table 1 and a flow table 2. In an example, as shown in Table 2, "Table name" shown in Table 2 is a name of the table, "Hash address 1" in the name column of the table represents a hash address in the flow table 1, "Hash address 2" represents a hash address in the flow table 2, "FKEY+AD" represents first information and second information in the flow table 1 and the flow table 2, and "SW_info" represents third information in the flow table 1 and the flow table 2. "Width" represents a bit width (or referred to as a length) corresponding to each entry in the name column of the table, "Entries" represents a quantity of entries of each entry in the name column of the table in the flow table 1 and the flow table 2, and "Total" represents a total storage size corresponding to each entry in the name column of the table.

Specifically, as shown in Table 2, it is assumed that a hash bucket length (that is, "Width" corresponding to the hash address 1 or the hash address 2 in Table 2) corresponding to each hash address in the flow table 1 and the flow table 2 in this example is 256 bits, and each hash bucket includes four units. In this case, as shown in Table 2, when a quantity (that is, "Entries" corresponding to the hash address 1 in Table 2) of hash addresses 1 in the flow table 1 is 20,971,520, correspondingly, it indicates that the flow table 1 includes 20,971,520 hash buckets. Therefore, a storage size (that is, "Total" corresponding to the hash address 1 in Table 2) corresponding to the flow table 1 is 20,971,520×256 bits, that is, about 5,120 Mb, and a quantity (that is, a quantity of units included in the flow table 1) of flow entries that can be stored in the flow table 1 is 20,971,520×4=83,886,080. Similarly, when a quantity (that is, "Entries" corresponding to the hash address 2 in Table 2) of hash addresses 2 in the flow table 2 is 1,048,576, correspondingly, it indicates that the flow table 2 includes 1,048,576 hash buckets. Therefore, a storage size (that is, "Total" corresponding to the hash address 2 in Table 2) corresponding to the flow table 2 is 1,048,576×256 bits, that is, about 256 Mb, and a quantity (that is, a quantity of units included in the flow table 2) of flow entries that can be stored in the flow table 2 is 1,048,576×4=4,194,304. It can be learned that a total quantity of flow entries that can be stored in the flow table 1 and the flow table 2 is 83,886,080+4,194,304=88,080,384.

To reduce a probability of a hash conflict, that is, to reduce a probability that hash values obtained through calculation based on flow identification information of different packet flows are the same, it is assumed that a quantity of flow entries actually stored in the flow table 1 and the flow table 2 is 20,971,520 (that is, about 24% (20,971,520/88,080,384) of the total quantity of flow entries that can be stored in the flow table 1 and the flow table 2). In this case, as shown in Table 2, when a length (that is, "Width" corresponding to FKEY+AD shown in Table 2) of each piece of [first information+second information] included in the flow table 1 and the flow table 2 is 512 bits, a storage size (that is, "Total" corresponding to FKEY+AD shown in Table 2) of the [first information+second information] in the flow table 1 and the flow table 2 is 20,971,520×512 bits, that is, about 10,240 Mb. In addition, when a length (that is, "Width" corresponding to SW_info shown in Table 2) of each piece of third information included in the flow table 1 and the flow table 2 is 256 Bytes, a storage size (that is, "Total" corresponding to SW_info shown in Table 2) of the third information in the flow table 1 and the flow table 2 is 20,971,520×256 Bytes, that is, about 5,120 MB. It can be learned that, based on the structure of the flow entry provided in this embodiment of this application, a total size of storage space required by the flow table 1 and the flow table 2 shown in Table 2 is 5,120 Mb+256 Mb+10,240 Mb+5,120 MB.

**Table 2**

| Table name | Width | Entries | Total |
|---|---|---|---|
| Hash address 1 | 256 bits | 20,971,520 | 5,120 Mb |
| Hash address 2 | 256 bits | 1,048,576 | 256 Mb |
| FKEY+AD | 512 bits | 20,971,520 | 10,240 Mb |
| SW_info | 256 Bytes | 20,971,520 | 5,120 MB |

In another example, when probabilities of hash conflicts are similar, a size of storage space shown in Table 2 is optimized. For example, a quantity of hash addresses in the flow table 1 is reduced (or understood as that a quantity of hash buckets in the flow table 1 is reduced), and a quantity of hash addresses in the flow table 2 is increased (that is, a quantity of hash buckets in the flow table 2 is increased).

Specifically, with reference to Table 2, as shown in Table 3, it is assumed that a quantity of hash addresses 1 in the flow table 1 is halved compared with that in Table 2, that is, 20,971,52072=10,485,760, and a quantity of hash addresses 2 in the flow table 2 is double that in Table 2, that is, 1,048,576×2=2,097,152.

Therefore, a storage size corresponding to the flow table 1 is 10,485,760×256 bits, that is, about 2,560 Mb, and a quantity (that is, a quantity of units included in the flow table 1) of flow entries that can be stored in the flow table 1 is 10,485,760×4=41,943,040. A storage size corresponding to the flow table 2 is 2,097,152×256 bits, that is, about 512 Mb, and a quantity (that is, a quantity of units included in the flow table 2) of flow entries that can be stored in the flow table 2 is 2,097,152×4=8,838,608. It can be learned that a total quantity of flow entries that can be stored in the flow table 1 and the flow table 2 is 41,943,040+8,838,608=50,331,648.

Further, when a quantity of flow entries actually stored in the flow table 1 and the flow table 2 is still 20,971,520 (that is, about 41% (20,971,520/50,331,648) of the total quantity of flow entries that can be stored in the flow table 1 and the flow table 2), compared with the example described in Table 2, a total size of storage space required by the flow table 1 and the flow table 2 in Table 3 is 2,560 Mb+512 Mb+10,240 Mb+5,120 MB.

It can be learned that, when the storage space required by the example in Table 3 is compared with the storage space required by the example in Table 2, storage space of about 2,304 Mb is saved.

**Table 3**

| Table name | Width | Entries | Total |
|---|---|---|---|
| Hash address 1 | 256 bits | 10,485,760 | 2,560 Mb |
| Hash address 2 | 256 bits | 2,097,152 | 512 Mb |
| FKEY+AD | 512 bits | 20,971,520 | 10,240 Mb |
| SW_info | 256 Bytes | 20,971,520 | 5,120 MB |

**The following describes, with reference to the accompanying drawings, the packet forwarding method provided in embodiments of this application.**

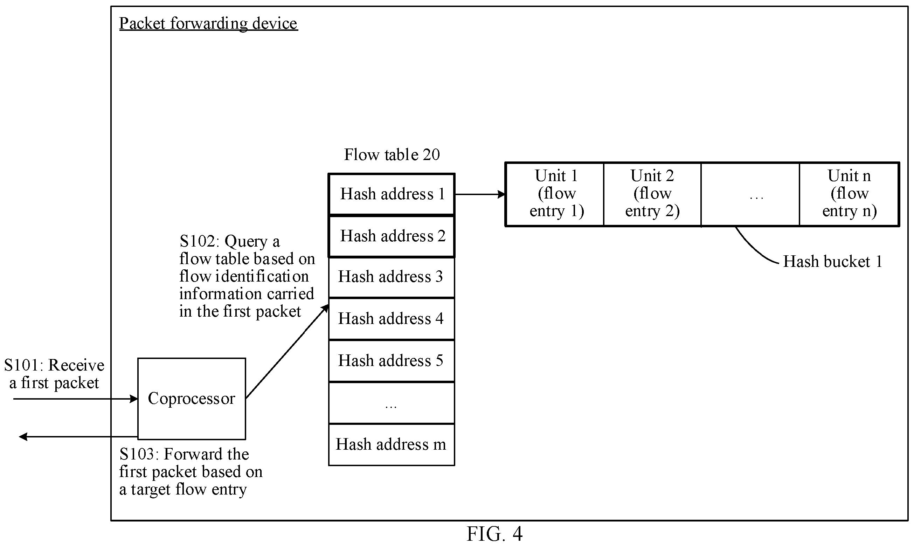

FIG. 4 is a schematic flowchart of a packet forwarding method according to an embodiment of this application. Optionally, the method may be applied to a packet forwarding device with a hardware structure shown in FIG. 1. As shown in FIG. 4, the method includes the following steps.

S101: The packet forwarding device receives a first packet.

The first packet may be a packet in any packet flow. The first packet carries flow identification information that can identify a packet flow in which the first packet is located. For detailed descriptions of the flow identification information, refer to the foregoing descriptions. Details are not described again.

For brief description, in this embodiment of this application, an example in which the packet flow in which the first packet is located is a first flow is used for description. Therefore, the first packet carries flow identification information that can identify the first flow.

The packet forwarding device may receive the first packet through a network interface (for example, the network interface 104 shown in FIG. 1) of the packet forwarding device, and send the first packet to a coprocessor (for example, the coprocessor 103 shown in FIG. 1) of the packet forwarding device. For detailed descriptions of the coprocessor herein, refer to the foregoing descriptions. Details are not described herein again.

S102: The packet forwarding device queries a flow table based on the flow identification information carried in the first packet, to determine whether a target flow entry matching the flow identification information carried in the first packet exists in the flow table.

For detailed descriptions of the flow table, refer to the foregoing descriptions. Details are not described again.

The target flow entry matching the flow identification information carried in the first packet is a target flow entry corresponding to the first flow to which the first packet belongs. The target flow entry is a session entry created by a processor of the packet forwarding device based on the flow identification information of the first flow. Herein, the flow identification information of the first flow is complete flow identification information of the first flow, and is specifically obtained by the processor of the packet forwarding device from the 1^{st} packet of the first flow or a plurality of packets including the 1^{st} packet. For detailed descriptions of the target flow entry, refer to the foregoing descriptions of the first flow entry. For detailed descriptions of creating the target flow entry by the processor of the packet forwarding device, refer to the following descriptions of S201 to S207. Details are not described herein.

Specifically, after the first packet is received, the coprocessor of the packet forwarding device queries the flow table based on the flow identification information carried in the first packet, to determine whether the target flow entry exists in the flow table.

After the first packet is received, the coprocessor of the packet forwarding device performs, by using the preset hash algorithm described above, hash calculation on the flow identification information carried in the first packet, to obtain a first hash value, where the first hash value is a hash value corresponding to the first flow. After the first packet is received, the coprocessor further performs, by using the preset compression algorithm described above, calculation on the flow identification information carried in the first packet, to obtain a first compression value, where the first compression value is a compression value corresponding to the first flow. Herein, the preset hash algorithm used to obtain the first hash value through calculation is the same as a preset hash algorithm used when the target flow entry is created. For detailed descriptions of obtaining the first hash value through calculation based on the flow identification information carried in the first packet, refer to the foregoing related descriptions of "a hash value corresponding to the packet flow". In addition, the preset compression algorithm used to obtain the first compression value through calculation is the same as a preset compression algorithm used when the target flow entry is created. For detailed descriptions of obtaining the first compression value through calculation based on the flow identification information carried in the first packet, refer to the foregoing related descriptions of "a compression value corresponding to the first packet flow". Details are not described again.

Therefore, the coprocessor of the packet forwarding device may query the foregoing flow table based on a correspondence between the first hash value and a hash address in the flow table, to determine a target hash address represented by the first hash value in the flow table. It should be understood that for detailed descriptions of "a correspondence between the first hash value and a hash address in the flow table" herein, refer to the correspondence between the hash value and the hash address described in the foregoing related descriptions that "a hash address of the flow entry corresponding to the packet flow in the flow table may be represented by a hash value corresponding to the packet flow". Details are not described again.

Then, the coprocessor of the packet forwarding device searches, based on the first compression value obtained through calculation, a hash bucket (referred to as a target hash bucket below) configured for the target hash address, to determine whether a target unit exists in the target hash bucket, where the target unit is a unit configured to store a flow entry that includes the first compression value.

When determining that the target unit does not exist in the target hash bucket, the coprocessor of the packet forwarding device determines that the target flow entry does not exist in the flow table.

When determining that the target unit exists in the target hash bucket, the coprocessor reads the flow entry stored in the target unit, and further accesses storage space to which a first pointer in the flow entry points, to read flow identification information in first information stored in the storage space. When determining that the flow identification information read from the first information is the same as the flow identification information carried in the first packet, the coprocessor determines the flow entry (that is, the foregoing flow entry that includes the first compression value) stored in the target unit as the target flow entry matching the flow identification information carried in the first packet, that is, the coprocessor determines that the target flow entry exists in the flow table. When determining that the flow identification information read from the first information is different from the flow identification information carried in the first packet, the coprocessor determines that the target flow entry does not exist in the flow table.

In some possible examples, because a storage capacity configured for a single flow table is limited, the processor of the packet forwarding device may create a plurality of flow tables, and a flow entry of each of the plurality of flow tables indicates packet forwarding of a different packet flow. In this case, the coprocessor of the packet forwarding device may search, one by one based on the foregoing described process, each flow table created by the processor of the packet forwarding device, to determine that the target flow entry exists in the flow table created by the processor of the packet forwarding device.

S103: When the target flow entry exists in the flow table, the coprocessor of the packet forwarding device forwards the first packet based on the target flow entry.

Specifically, when the coprocessor of the packet forwarding device determines that the target flow entry exists in the flow table created by the processor of the packet forwarding device, the coprocessor forwards the first packet based on the target flow entry.

A specific process in which the coprocessor forwards the first packet based on the target flow entry may be as follows: The coprocessor of the packet forwarding device accesses the storage space to which the first pointer in the target flow entry points, to read forwarding information in the first information stored in the storage space, and then performs corresponding forwarding processing on the first packet based on the read forwarding information. Details are not described again.

According to the packet forwarding method described in S101 to S103, the packet forwarding device may directly query, using the coprocessor, the flow table created by the processor, and when the coprocessor finds the target flow entry matching the flow identification information carried in the first packet, the coprocessor forwards the first packet based on the target flow entry. According to the method, the packet forwarding device does not need to create and maintain two flow tables (that is, the software table and the hardware table described above) that have a large amount of duplicate content, but needs to create and maintain only one flow table. Therefore, storage resources used by the packet forwarding device to store the flow table are saved, and computing resources required when the packet forwarding device maintains the flow table are also saved.

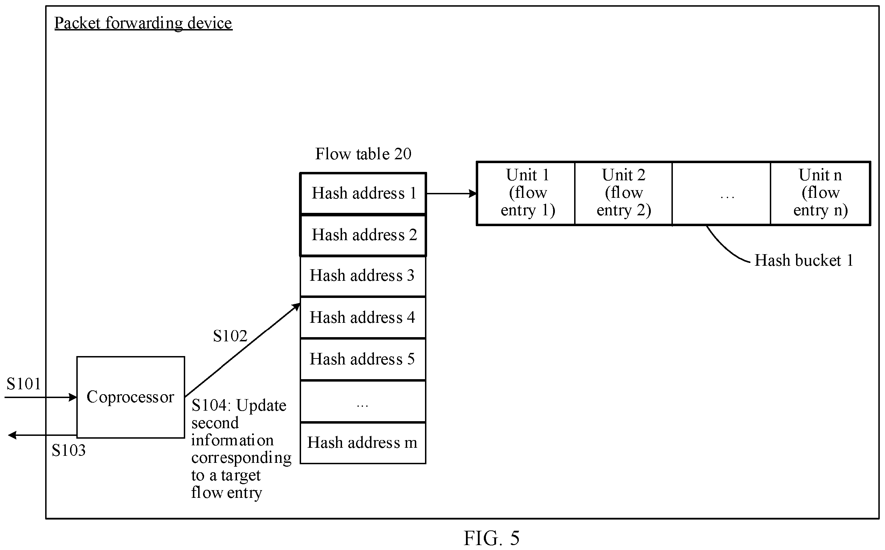

In some possible embodiments, after determining that the target flow entry exists in the flow table, the coprocessor of the packet forwarding device may further record association data of the first packet in the target flow entry, so that the packet forwarding device collects statistics on flow information of the first flow to which the first packet belongs. Further, the packet forwarding device can monitor a transmission status of the first flow based on the flow information that is of the first flow and that is obtained through statistics collection, to accurately locate an exception when the exception occurs during transmission of the first flow. Based on this, refer to FIG. 5. After performing S102, the packet forwarding device may further perform S104.

S104 (optional): The packet forwarding device updates second information corresponding to the target flow entry, to update association data in the second information to the association data of the first packet.

The second information corresponding to the target flow entry is second information of the first flow corresponding to the target flow entry.

Specifically, after determining that the target flow entry exists in the flow table, the coprocessor of the packet forwarding device reads the first pointer in the target flow entry, and accesses the storage space that is used to store the first information of the first flow and to which the first pointer points, to read a second pointer in the first information. Further, the coprocessor accesses storage space that is used to store the second information of the first flow and to which the second pointer points, and updates the second information in the storage space, to update the association data in the second information to the association data of the first packet. For example, the coprocessor writes the association data of the first packet into the storage space for storing the second information of the first flow, to overwrite original association data of a packet in the second information. For detailed descriptions of the association data, refer to the foregoing descriptions of "the association data". Details are not described herein again.

Optionally, when the association data in the second information includes receiving time of the packet, and clocks of the processor and the coprocessor of the packet forwarding device are not synchronized, the coprocessor of the packet forwarding device further records a timestamp of the second information, where the timestamp represents that the receiving time of the packet in the second information is time determined based on the clock of the processor or time determined based on the clock of the coprocessor. In the following, when the receiving time of the packet in the second information is the time determined based on the clock of the processor, a corresponding timestamp is a processor timestamp. When the receiving time of the packet in the second information is the time determined based on the clock of the coprocessor, a corresponding timestamp is a coprocessor timestamp. The timestamp of the second information may be recorded in the association data of the second information, or the timestamp of the second information is stored in preset space of a memory. This is not limited. For specific descriptions of creating and storing the timestamp by the packet forwarding device, refer to the following related descriptions of S206. Details are not described herein.

Therefore, when the timestamp of the second information is the processor timestamp and is recorded in the association data of the second information, the second information updated by the coprocessor further includes the coprocessor timestamp. That is, the processor timestamp in the second information is updated to the coprocessor timestamp.

Certainly, when the timestamp of the second information is the processor timestamp and is stored in the preset space, after updating the second information, the coprocessor of the packet forwarding device further updates the processor timestamp stored in the preset space to the coprocessor timestamp. It should be understood that, in comparison with updating the timestamp stored in the preset space of the memory, when the timestamp recorded in the association data of the second information is updated, the coprocessor accesses the memory for fewer times.

In an example, with reference to FIG. 3, it is assumed that compared with the first packet, a packet 1 is a packet that is of the first flow and that is previously received by the packet forwarding device. In this case, the original association data in the second information of the first flow is association data of the packet 1, specifically including a quantity of data packets in the packet 1, a quantity of bytes included in all data packets in the packet 1, a TCP flag carried in the packet 1, and a timestamp that represents receiving time of the packet 1. Therefore, after the coprocessor of the packet forwarding device determines that the target flow entry exists in the flow table, the coprocessor addresses the storage space of the first information of the first flow based on the first pointer in the target flow entry, addresses the storage space of the second information of the first flow based on the second pointer in the first information, and then writes the association data of the first packet into the storage space of the second information, to overwrite the original association data in the second information. For example, association data in the updated second information may be a quantity of data packets in the first packet, a quantity of bytes included in all data packets in the first packet, a TCP flag carried in the first packet, and a timestamp that represents receiving time of the first packet.

It should be noted that a sequence in which the packet forwarding device performs S103 and S104 is not limited in this embodiment of this application. For example, the packet forwarding device may first perform S103, and then perform S104, or the packet forwarding device simultaneously performs S103 and S104. This is not limited.

In this way, in S104, each time the packet forwarding device receives a packet and determines that a flow entry corresponding to a packet flow in which the packet is located exists in the flow table, the packet forwarding device updates second information of the packet flow corresponding to the flow entry, to update association data in the second information to association data of a newly received packet, so that the packet forwarding device collects statistics on flow information of the packet flow based on the updated association data. In this way, the packet forwarding device can monitor a transmission status of the packet flow based on the flow information obtained through statistics collection, to accurately locate an exception when the exception occurs during transmission of the packet flow.

In some other embodiments, in S102, when the coprocessor of the packet forwarding device determines that the target flow entry does not exist in the flow table created by the packet forwarding device, it indicates that the packet forwarding device has not created the target flow entry corresponding to the first flow to which the first packet belongs. In this case, the processor of the packet forwarding device may create the target flow entry based on the first packet. In other words, the first packet is used by the processor of the packet forwarding device to create the target flow entry.

The following uses an example in which the first packet is the 1^{st} packet of the first flow to which the first packet belongs, and the first packet carries the complete flow identification information of the first flow to describe a process in which the packet forwarding device creates the target flow entry based on the first packet. For detailed descriptions of the flow identification information of the first flow, refer to the foregoing related descriptions of "the flow identification information of the packet flow". Details are not described again.

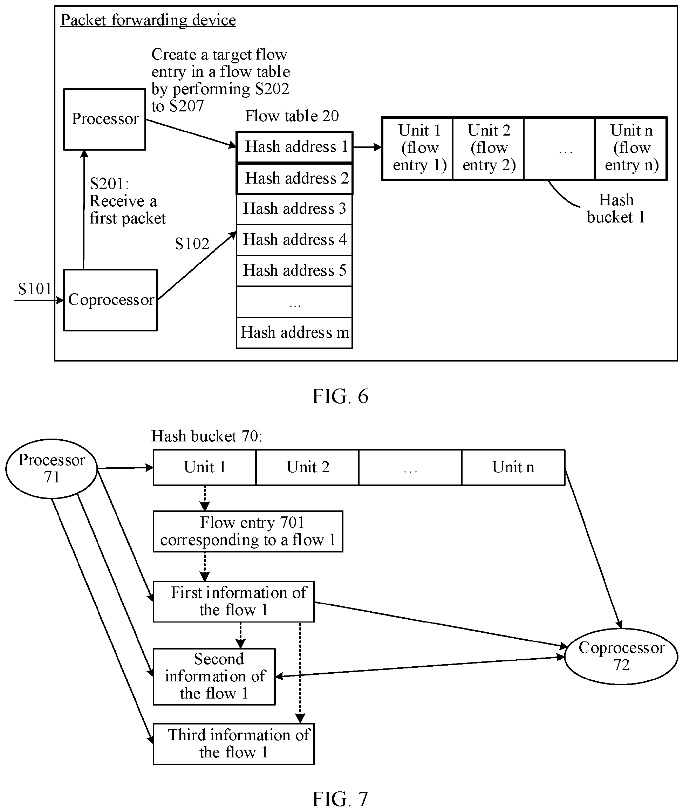

FIG. 6 is a diagram of a process in which a packet forwarding device creates a target flow entry according to an embodiment of this application. As shown in FIG. 6, the process may be implemented by using the following steps.

S201: When a target flow entry does not exist in a flow table, a processor of a packet forwarding device receives a first packet.

When a coprocessor of the packet forwarding device determines, in S102, that the target flow entry does not exist in the flow table created by the packet forwarding device, the coprocessor sends the first packet to the processor of the packet forwarding device. In response, the processor of the packet forwarding device receives the first packet.

Optionally, the coprocessor of the packet forwarding device may send the first packet to the processor of the packet forwarding device through a bus (for example, the bus 105 shown in FIG. 1) connected to the processor.

S202: The processor of the packet forwarding device creates a first pointer that points to first storage space, a second pointer that points to second storage space, and a third pointer that points to third storage space.

Specifically, the processor of the packet forwarding device may apply for the first storage space, the second storage space, and the third storage space from a storage pool.

The first storage space is used to store first information of a first flow, and the first information of the first flow includes complete flow identification information of the first flow and forwarding information of the first flow. For detailed descriptions of the complete flow identification information of the first flow, refer to the foregoing related descriptions of "the flow identification information of the packet flow". Details are not described again. Specifically, the processor of the packet forwarding device may obtain the complete flow identification information of the first flow from the first packet. The forwarding information of the first flow may be determined by the packet forwarding device based on a detected connection status of the first flow and a preset forwarding policy. Details are not described again.

The second storage space is used to store second information of the first flow, and the second information of the first flow includes association data of the first packet. For detailed descriptions of the association data, refer to the foregoing descriptions of "the association data". Details are not described again.

The third storage space is used to store third information of the first flow, and the third information of the first flow includes a control parameter of a process for processing the first flow and that is run in the processor of the packet forwarding device. For detailed descriptions of the control parameter of the process for processing the first flow and that is run in the processor of the packet forwarding device, refer to the foregoing descriptions of "a control parameter of a process for processing the first packet flow and that is run in the processor of the packet forwarding device". Details are not described again.

The storage pool may be storage space reserved by the packet forwarding device in advance for storing related information of the flow entry in the flow table. A size of the storage pool may be predetermined based on a forwarding capability of the packet forwarding device. This is not limited in this embodiment of this application. It should be understood that, in comparison with a solution (that is, fixed storage space for storing the first information, the second information, and the third information is set) of fixed storage resources, in this embodiment of this application, the storage pool that allows dynamic application for storage space is set, so that utilization of storage resources of the packet forwarding device can be improved when a quantity of packet flows transmitted by the packet forwarding device changes greatly.

Further, after applying for the first storage space, the second storage space, and the third storage space from the storage pool, the processor of the packet forwarding device may generate, based on the 1^{st} address of the first storage space, the first pointer including the 1^{st} address, generate, based on the 1^{st} address of the second storage space, the second pointer including the 1^{st} address, and generate, based on the 1^{st} address of the third storage space, the third pointer including the 1^{st} address.

It should be noted that, for descriptions of specific forms of the 1^{st} addresses stored in the first pointer, the second pointer, and the third pointer, refer to the foregoing descriptions of the address stored in the first pointer. Details are not described herein again.

It should be understood that, compared with preset storage space with a fixed size that is used to store the flow table in a memory of the packet forwarding device, when the processor of the packet forwarding device creates the target flow entry, the first storage space that is applied for to store the first information of the first flow is released after the first information is deleted. Similarly, the second storage space applied for by the processor of the packet forwarding device to store the second information of the first flow is released after the second information is deleted, and the third storage space applied for by the processor of the packet forwarding device to store the third information of the first flow is released after the third information is deleted. It may be understood that released space may be applied for by the processor of the packet forwarding device for another flow when a flow entry of the another flow is created, to store first information, second information, and third information of the another flow. It can be learned that utilization of storage space of the packet forwarding device can be improved in the solution provided in this embodiment of this application.

S203: The processor of the packet forwarding device obtains, from the first packet, flow identification information carried in the first packet, and determines, based on the obtained flow identification information, a hash value and a compression value that correspond to the first flow.

It can be learned from the foregoing that the flow identification information carried in the first packet is the flow identification information of the first flow to which the first packet belongs.

Specifically, after obtaining the flow identification information of the first flow from the first packet, the processor of the packet forwarding device performs hash calculation on the flow identification information of the first flow based on the preset hash algorithm described above, to obtain a first hash value (that is, the first hash value in S102). In addition, the processor of the packet forwarding device further performs calculation on the flow identification information of the first flow based on the preset compression algorithm described above, to obtain a first compression value (that is, the first compression value in S102). For detailed descriptions of obtaining the first hash value through calculation based on the flow identification information of the first flow, refer to the foregoing related descriptions of "a hash value corresponding to the packet flow". For detailed descriptions of obtaining the first compression value through calculation based on the flow identification information of the first flow, refer to the foregoing related descriptions of "a compression value corresponding to the first packet flow". Details are not described again.

It should be noted that a sequence in which the packet forwarding device performs S202 and S203 is not specifically limited in this embodiment of this application. For example, the packet forwarding device may first perform S202, and then perform S203, or the packet forwarding device simultaneously performs S202 and S203. This is not limited.

S204: The processor of the packet forwarding device determines a target unit in the flow table based on a hash value corresponding to the first flow, and writes a compression value corresponding to the first flow and the created first pointer into the target unit.

The target unit is an idle unit in a target hash bucket, and the target hash bucket is a hash bucket configured for a hash address represented in the flow table by the hash value corresponding to the first flow.

Specifically, the processor of the packet forwarding device may first query the flow table based on the hash value corresponding to the first flow, to determine a target hash address represented in the flow table by the hash value corresponding to the first flow. Then, the processor of the packet forwarding device determines the target unit in idle units in the target hash bucket configured for the target hash address.

Optionally, when determining the target unit in the idle units in the target hash bucket, the processor of the packet forwarding device may randomly determine any idle unit as the target unit, or may determine an idle unit with a highest or lowest ranking as the target unit based on rankings of the idle units in the target hash bucket. This is not limited.

Further, after determining the target unit, the processor of the packet forwarding device writes the compression value corresponding to the first flow and the created first pointer into the target unit.

S205: The processor of the packet forwarding device writes the flow identification information carried in the first packet, the forwarding information of the first flow, and the second pointer and the third pointer that are created above into the first storage space.

Specifically, the processor of the packet forwarding device may first determine the forwarding information of the first flow based on the detected connection status of the first flow and the preset forwarding policy.

Further, the processor of the packet forwarding device writes the flow identification information that is of the first flow and that is obtained from the first packet, the forwarding information of the first flow, and the second pointer and the third pointer that are created above into the first storage space.

S206: The processor of the packet forwarding device writes the association data of the first packet into the second storage space.

Specifically, the processor of the packet forwarding device may first obtain the association data of the first packet based on the first packet. For example, the processor of the packet forwarding device collects statistics on a quantity of data packets in the first packet and a quantity of bytes included in all data packets in the first packet, extracts, from the first packet, a TCP flag carried in the first packet, and obtains receiving time of the first packet.

Further, the processor of the packet forwarding device writes the obtained association data of the first packet as the second information of the first flow into the second storage space.

Optionally, when clocks of the processor and the coprocessor of the packet forwarding device are not synchronized, and the association data of the first packet includes the receiving time of the packet, the second information may further include a timestamp of the second information, and the timestamp is specifically a processor timestamp herein. Therefore, the processor of the packet forwarding device further writes the processor timestamp into the second storage space. For detailed descriptions of the processor timestamp herein, refer to the foregoing descriptions. Details are not described herein again.

Optionally, when the clocks of the processor and the coprocessor of the packet forwarding device are not synchronized, and the association data of the first packet includes the receiving time of the packet, the processor of the packet forwarding device further writes the timestamp of the second information into the preset space of the memory described above, and the timestamp is specifically the processor timestamp herein.

It should be understood that, in comparison with writing the processor timestamp into the preset space of the memory, that the processor timestamp is carried in the association data of the second information can reduce a quantity of times that the processor or the coprocessor accesses the memory later. This is because when the second information includes the timestamp of the second information, that the processor or the coprocessor accesses the second information in the second storage space of the memory indicates that the timestamp of the second information is also accessed. When the timestamp of the second information is stored in the preset space of the memory, after accessing the second information in the second storage space of the memory, the processor or the coprocessor further needs to access the memory, to read the timestamp of the second information from the preset space of the memory.

S207: The processor of the packet forwarding device writes the control parameter of the process in which the processor processes the first flow into the third storage space.

The control parameter of the process in which the processor of the packet forwarding device processes the first flow is the foregoing third information. For detailed descriptions, refer to the foregoing related descriptions of the third information. Details are not described again.

It should be noted that a sequence in which the packet forwarding device performs S204 to S207 is not specifically limited in this embodiment of this application. For example, the packet forwarding device may sequentially perform S204 to S207, or the packet forwarding device simultaneously performs S204 to S207. This is not limited.

So far, by using the process described in S201 to S207, the packet forwarding device creates, based on the first packet, the target flow entry corresponding to the first flow to which the first packet belongs.

It should be understood that, in this embodiment of this application, after the processor of the packet forwarding device completes creating the flow entry, the flow entry is further configured as follows: The processor of the packet forwarding device has read permission and deletion permission for the flow entry, the first information, the second information, and the third information, and the processor of the packet forwarding device has no write permission for the second information. The coprocessor of the packet forwarding device has read-only permission for the flow entry and the first information, and has read permission and write permission for the second information, and the third information is invisible to the coprocessor of the packet forwarding device. Through such configuration, when the processor and the coprocessor of the packet forwarding device access the flow table, access to the flow table without a read/write conflict is implemented through double isolation of time and storage space.

To more specifically describe a manner in which the packet forwarding device accesses the flow entry in this embodiment of this application, FIG. 7 is a diagram of a manner in which a packet forwarding device accesses a flow entry according to an embodiment of this application.

Dashed-line arrows in FIG. 7 indicate belonging relationships between different information. As shown in FIG. 7, a hash bucket 70 includes n units: a unit 1, a unit 2, ..., and a unit n. A flow entry 701 corresponding to a flow 1 is stored in the unit 1 of the hash bucket 70. In addition, storage space to which a first pointer in the flow entry 701 points stores first information of the flow 1, storage space to which a second pointer in the first information of the flow 1 points stores second information of the flow 1, and storage space to which a third pointer in the first information of the flow 1 points stores third information of the flow 1. Detailed descriptions of the first information, the second information, and the third information of the flow 1 are not described herein again.

In addition, solid-line arrows in FIG. 7 indicate manners in which a processor 71 and a coprocessor 72 of the packet forwarding device access each piece of information in the flow entry. For an arrow pointing from the processor 71 or the coprocessor 72 to table information, it indicates that the processor 71 or the coprocessor 72 is allowed to write data into storage space for storing the table information. For an arrow pointing from the table information to the processor 71 or the coprocessor 72, it indicates that the processor 71 or the coprocessor 72 is allowed to read data from the storage space for storing the table information.

As shown in FIG. 7, in a stage in which the processor 71 of the packet forwarding device creates the flow entry 701, the processor 71 may write the flow entry 701 corresponding to the flow 1 into the unit 1 in the hash bucket 70, write the first information of the flow 1 into the storage space to which the first pointer in the flow entry 701 points, write the second information of the flow 1 into the storage space to which the second pointer in the first information of the flow 1 points, and write the third information of the flow 1 into the storage space to which the third pointer in the first information of the flow 1 points.

As shown in FIG. 7, in a stage after the flow entry 701 is created by the processor 71 of the packet forwarding device, that is, in a stage in which the flow entry 701 is used to guide the flow 1 to forward a subsequent packet, the coprocessor 72 of the packet forwarding device may read the flow entry 701 stored in the unit 1 in the hash bucket 70, and the first information and the second information of the flow 1, and may write data (for example, the updated second information described above) into the storage space for storing the second information of the flow 1. The processor 71 of the packet forwarding device may read each piece of information (not shown in the figure) shown in FIG. 7, and an access capability of the processor 71 of the packet forwarding device to access the second information of the flow 1 is read-only. In this way, an access conflict caused by the processor 71 and the coprocessor 72 by simultaneously writing data into the storage space for storing the second information of the flow 1 can be avoided.

In addition, because the flow table of the packet forwarding device is stored in a segment of storage space with a fixed size that is pre-allocated by the packet forwarding device in the memory of the packet forwarding device, when creating the flow entry by performing S201 to S207, the packet forwarding device may directly write the compression value corresponding to the packet flow and the first pointer created for the packet flow into the storage space, that is, the packet forwarding device directly accesses the memory, to directly create the flow entry in the flow table in the memory. In this way, it can be ensured that the coprocessor of the packet forwarding device can access the flow entry at the first time after the processor completes creating the flow entry, to improve forwarding efficiency of forwarding the packet flow by the packet forwarding device.

In this case, neither the processor nor the coprocessor of the packet forwarding device needs to access the flow table through a cache.

However, the packet forwarding device performs S201 to S207 through the processor, and a manner in which the processor accesses (including a read operation, a write operation, and the like) the memory is usually accessing the memory through the cache (cache). Therefore, when the processor of the packet forwarding device directly accesses the memory to directly create the flow entry in the flow table in the memory, an access manner in which the processor accesses the memory needs to be modified, that is, the access manner in which the processor accesses the memory is modified from access through the cache to direct access. However, accessing the memory through the cache can effectively improve service processing efficiency of the processor. Therefore, after the access manner in which the processor accesses the memory is modified, processing efficiency of another service run on the processor is reduced.

Therefore, in a possible implementation, the processor of the packet forwarding device first creates the flow entry in the flow table in the cache by performing S201 to S207, and indicates the cache to immediately flush, after the flow entry is created, the flow entry into the flow table stored in the memory. In this way, the access manner in which the processor accesses the memory does not need to be modified, and it can also be ensured that the coprocessor of the packet forwarding device can access the flow entry at the first time after the processor completes creating the flow entry, to improve forwarding efficiency of forwarding a packet in the packet flow by the packet forwarding device.

In this case, when accessing the flow table, the processor of the packet forwarding device may access the flow table through the cache. The coprocessor of the packet forwarding device may directly access the flow table by using a physical address of the flow table, or may access the flow table through the cache by using a logical address of the flow table. This is not limited.

Optionally, when both the processor and the coprocessor of the packet forwarding device access the flow table through the cache, the processor and the coprocessor may share a cache with another service processed by the packet forwarding device, or may use a dedicated cache allocated by the packet forwarding device for accessing the flow table. This is not limited. In an example, a size of the cache specially allocated by the packet forwarding device for accessing the flow table may be set to a size not greater than 1/8 of all cache space configured for the packet forwarding device.

It should be understood that, when both the processor and the coprocessor of the packet forwarding device access the flow table through the cache, in a scenario in which there are a large quantity of packet flows to be forwarded by the packet forwarding device, there are a large quantity of refresh operations in the cache. If the processor and the coprocessor of the packet forwarding device share a cache with another service when accessing the flow table, data of the another service in the cache is deleted, and consequently, processing efficiency of the another service is reduced. Therefore, impact on the processing efficiency of the another service in the packet forwarding device can be avoided through the dedicated cache allocated by the packet forwarding device for accessing the flow table.

In still some possible embodiments, when packet transmission is stopped in a packet flow, the packet forwarding device needs to delete a flow entry corresponding to the packet flow from the flow table, to release corresponding storage space to store a flow entry of another to-be-transmitted packet flow. This process may also be referred to as a process of performing aging processing on the flow entry in the flow table.

The following describes the process of performing aging processing on the flow entry in the flow table provided in embodiments of this application.

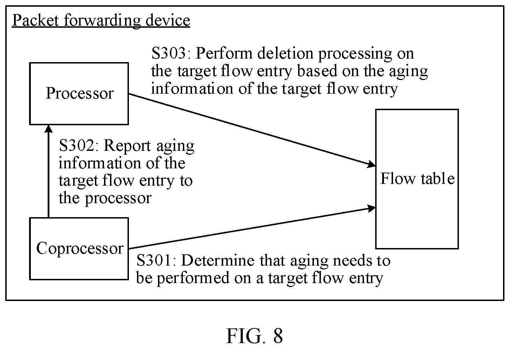

That the packet forwarding device performs aging processing on the foregoing target flow entry is used as an example. FIG. 8 is a diagram of a process of performing aging processing on a flow entry according to an embodiment of this application. The process may include the following steps.

S301: A coprocessor of a packet forwarding device determines that aging needs to be performed on a target flow entry.

Specifically, the coprocessor of the packet forwarding device may first poll a flow entry in a flow table, to determine whether a second packet is received within aging duration. Herein, the second packet is a packet that carries flow identification information matching the target flow entry. Because the target flow entry is a session entry created based on flow identification information of a first flow, the flow identification information matching the target flow entry is the flow identification information of the first flow. Further, the second packet that carries the flow identification information matching the target flow entry is a packet of the first flow. In this way, the second packet may also be understood as a packet that needs to be forwarded based on the target flow entry.

Optionally, the coprocessor of the packet forwarding device may periodically poll the flow entry in the flow table, to determine whether the second packet is received within the aging duration. Both the aging duration and periodicity duration of a polling periodicity are a preset period of time, and the aging duration may be the same as or different from the periodicity duration of the polling periodicity. Specific values of the aging duration and the periodicity duration of the polling periodicity are not limited in this embodiment of this application. In an example, the aging duration is 8 minutes, 10 minutes, or the like, and the periodicity duration of the polling periodicity is 4 minutes, 5 minutes, or the like. This is not limited thereto.

Specifically, for detailed descriptions of a specific implementation in which the coprocessor of the packet forwarding device determines whether the second packet is received within the aging duration, refer to the following descriptions. Details are not described herein.

Further, when the coprocessor of the packet forwarding device determines that no second packet is received within the aging duration, it indicates that the packet forwarding device does not receive, within the aging duration, the packet that needs to be forwarded based on the target flow entry. Alternatively, it is understood as that duration of transmission interruption of a packet flow on which packet forwarding needs to be performed based on the target flow entry has exceeded the aging duration. In this case, the coprocessor of the packet forwarding device determines that the aging needs to be performed on the target flow entry, and therefore, S302 is performed.

On the contrary, when the coprocessor of the packet forwarding device determines that the second packet is received within the aging duration, it indicates that the packet forwarding device receives, within the aging duration, the packet that needs to be forwarded based on the target flow entry. Alternatively, it is understood as that a packet flow on which packet forwarding needs to be performed based on the target flow entry is normally transmitted without transmission interruption. In this case, the coprocessor of the packet forwarding device determines that the aging does not need to be performed on the target flow entry, and then continues polling the flow table, for example, polling and processing a next flow entry of the target flow entry.

S302: The coprocessor of the packet forwarding device reports aging information of the target flow entry to a processor, where the aging information of the target flow entry indicates the processor to perform deletion processing on the target flow entry.

Specifically, after determining that the aging needs to be performed on the target flow entry, the coprocessor of the packet forwarding device first determines the aging information of the target flow entry.

In a possible implementation, after determining that the aging needs to be performed on the target flow entry, the coprocessor of the packet forwarding device determines address information of the target flow entry and address information of related information of the target flow entry as the aging information of the target flow entry. The address information of the target flow entry includes an ID of a target unit in a target hash bucket used to store the target flow entry and a hash address of the target hash bucket in the flow table. The address information of the related information of the target flow entry includes a first pointer in the target flow entry, and a second pointer and a third pointer that are in first information stored in storage space to which the first pointer points. It can be learned that, in this implementation, the coprocessor of the packet forwarding device searches for and determines the address information of the target flow entry and the address information of the related information of the target flow entry based on the target flow entry, and determines the found address information as the aging information of the target flow entry. In this way, the processor configured to perform deletion processing does not need to consume computing resources to search for the address information of the target flow entry and the address information of the related information of the target flow entry, so that the computing resources of the processor are saved, and therefore, efficiency of processing another service by the processor is improved.

In another possible implementation, after determining that the aging needs to be performed on the target flow entry, the coprocessor of the packet forwarding device determines address information of the target flow entry as the aging information of the target flow entry, or determines the flow identification information matching the target flow entry as the aging information of the target flow entry. The address information of the target flow entry includes an ID of a target unit in a target hash bucket used to store the target flow entry and a hash address of the target hash bucket in the flow table. Further, after obtaining the aging information reported by the coprocessor, the processor of the packet forwarding device determines the address information of the target flow entry and address information of related information of the target flow entry based on the obtained aging information.

For example, if the aging information received by the processor includes the address information of the target flow entry, the processor determines the address information of the related information of the target flow entry based on the address information of the target flow entry. Specifically, the processor reads content of the target flow entry based on the address information of the target flow entry, and determines the second pointer and the third pointer based on the first pointer in the target flow entry, so that the processor obtains the address information of the related information of the target flow entry.

For another example, if the aging information received by the processor includes the flow identification information matching the target flow entry, the processor searches the flow table for the target flow entry based on the flow identification information matching the target flow entry, to determine the address information of the target flow entry and the address information of the related information of the target flow entry. Specifically, the processor searches the flow table for the target flow entry based on the flow identification information matching the target flow entry, to obtain the address information of the target flow entry. The processor further determines the second pointer and the third pointer based on the first pointer in the found target flow entry, to obtain the address information of the related information of the target flow entry.

Further, after determining the aging information of the target flow entry, the coprocessor of the packet forwarding device reports the aging information of the target flow entry to the processor.

In a possible implementation, the coprocessor of the packet forwarding device packs the determined aging information of the target flow entry into an aging packet, and sends the packed aging packet to the processor.

In another possible implementation, the coprocessor of the packet forwarding device may report the aging information of the target flow entry to the processor using a ring storage queue. For detailed descriptions that the coprocessor of the packet forwarding device reports the aging information of the target flow entry to the processor using the ring storage queue, refer to the following descriptions. Details are not described herein.

S303: The processor of the packet forwarding device performs deletion processing on the target flow entry based on the aging information that is of the target flow entry and that is reported by the coprocessor.

Optionally, when receiving the aging packet sent by the coprocessor, the processor of the packet forwarding device may perform deletion processing on the target flow entry based on the aging information obtained from the aging packet.

Optionally, the processor of the packet forwarding device may perform deletion processing on the target flow entry based on the aging information obtained from the ring storage queue. For detailed descriptions of the aging information obtained by the processor of the packet forwarding device from the ring storage queue, refer to the following related descriptions that "the coprocessor of the packet forwarding device reports the aging information of the target flow entry to the processor by using the ring storage queue". Details are not described herein.

In a possible case, when the aging information obtained by the processor of the packet forwarding device includes the address information of the target flow entry and the address information of the related information of the target flow entry, the processor directly performs deletion processing on the target flow entry based on an indication of the address information in the aging information.

In another possible case, when the aging information obtained by the processor of the packet forwarding device includes the address information of the target flow entry, or includes the flow identification information matching the target flow entry, the processor of the packet forwarding device first determines the address information of the target flow entry and the address information of the related information of the target flow entry based on the obtained aging information, and then performs deletion processing on the target flow entry based on the determined address information.

For detailed descriptions that the processor of the packet forwarding device determines the address information of the target flow entry and the address information of the related information of the target flow entry based on the obtained aging information, refer to the foregoing descriptions that "after obtaining the aging information reported by the coprocessor, the processor of the packet forwarding device determines the address information of the target flow entry and address information of related information of the target flow entry based on the obtained aging information". Details are not described again.

Specifically, the deletion processing performed by the processor of the packet forwarding device on the target flow entry includes clearing, based on an address indicated by the address information of the target flow entry, a target unit used to store the target flow entry in a hash bucket of the flow table, deleting, based on the first pointer, the first information in first storage space to which the first pointer points, deleting, based on the second pointer, second information in second storage space to which the second pointer points, and deleting, based on the third pointer, third information in third storage space to which the third pointer points.

It may be understood that, after the processor deletes the first information in the first storage space, the second information in the second storage space, and the third information in the third storage space, it is equivalent to a case in which a storage pool reclaims empty first storage space, empty second storage space, and empty third storage space. In this way, when subsequently creating a flow entry of another packet flow, the packet forwarding device may apply for, from the storage pool that reclaims the first storage space, the second storage space, and the third storage space, storage space for storing first information, second information, and third information of the packet flow.

So far, in this embodiment of this application, the aging processing is performed on the flow entry in the flow table by using S301 to S303. In this way, the flow table may be updated in time based on a change of a packet flow transmission status (for example, a flow entry of a mouse flow is deleted in time). This can improve utilization of the flow table, and improve packet forwarding efficiency of the packet forwarding device. In addition, in this embodiment of this application, after the aging processing is performed on the flow entry, the first storage space, the second storage space, and the third storage space that correspond to the flow entry are released. In this way, utilization of storage resources of the packet forwarding device can be improved.

In addition, in a manner in which the coprocessor of the packet forwarding device performs S301 and S302, and then the processor of the packet forwarding device performs deletion processing on the target flow entry based on the aging information determined by the coprocessor, the computing resources of the processor can be saved.

In some possible embodiments, S301 may alternatively be performed by the processor of the packet forwarding device. In this way, after determining that the aging needs to be performed on the target flow entry, the processor of the packet forwarding device may further determine the aging information, and perform the deletion processing based on the aging information.

**The following uses examples to describe specific implementations of the foregoing descriptions that "the coprocessor of the packet forwarding device determines whether the second packet is received within the aging duration".**

### Implementation 1

The coprocessor of the packet forwarding device determines, based on the target flow entry, a time difference between current time of the coprocessor and last time the packet forwarding device receives the second packet, and determines, based on the time difference, whether the second packet is received within the aging duration.

Specifically, the coprocessor of the packet forwarding device may periodically traverse the flow table, to poll each flow entry in the flow table. When obtaining the target flow entry through polling, the coprocessor of the packet forwarding device may determine, based on the target flow entry, the last time the second packet is received. A specific process is as follows: When obtaining the target flow entry through polling, the coprocessor of the packet forwarding device may read the first pointer in the target flow entry, and read, based on the first pointer, the first information from the first storage space to which the first pointer points. Further, the coprocessor of the packet forwarding device reads, based on the second pointer in the first information, the second information from the second storage space to which the second pointer points, to obtain receiving time that is of a packet and that is recorded in the second information. It should be understood that the receiving time of the packet in the second information is time at which the packet forwarding device receives the packet of the first flow corresponding to the target flow entry most recently, that is, the last time the packet forwarding device receives the second packet.

Further, in a possible case, when clocks of the coprocessor and the processor of the packet forwarding device are synchronized, the coprocessor of the packet forwarding device determines a difference between the current time of the coprocessor and the receiving time that is of the packet and that is obtained from the second information as the time difference between the current time of the coprocessor and the last time the packet forwarding device receives the second packet, that is, the time difference=the current time of the coprocessor-the last time the packet forwarding device receives the second packet.

In another possible case, when clocks of the coprocessor and the processor of the packet forwarding device are not synchronized (that is, asynchronous), the processor of the packet forwarding device creates the target flow entry, and the second information of the target flow entry includes the receiving time of the packet, a timestamp of the second information is recorded in the processor, and the timestamp is updated by the coprocessor of the packet forwarding device in a process of using the target flow entry. For detailed descriptions, refer to the related descriptions of S104. Details are not described again.

In this case, the coprocessor of the packet forwarding device further needs to obtain the timestamp of the second information. When the second information of the target flow entry includes the timestamp of the second information, the coprocessor of the packet forwarding device reads the timestamp from the second information. When the timestamp is stored in the foregoing preset space, the coprocessor of the packet forwarding device reads the timestamp from the preset space.

When the timestamp obtained by the coprocessor of the packet forwarding device is a coprocessor timestamp, the coprocessor of the packet forwarding device directly determines the difference between the current time of the coprocessor and the receiving time that is of the packet and that is obtained from the second information as the foregoing time difference, that is, the time difference=the current time of the coprocessor-the last time the packet forwarding device receives the second packet.

When the timestamp obtained by the coprocessor of the packet forwarding device is a processor timestamp, the coprocessor of the packet forwarding device obtains the current time of the coprocessor and current time of the processor, and calculates a synchronization time difference between the coprocessor and the processor based on the current time of the coprocessor and the current time of the processor. Specifically, the synchronization time difference is an absolute value of a difference between the current time of the coprocessor and the current time of the processor, that is, the synchronization time difference=|the current time of the coprocessor-the current time of the processor|. Further, the coprocessor of the packet forwarding device obtains the foregoing time difference through calculation based on the synchronization time difference, the current time of the coprocessor, and the receiving time that is of the packet and that is obtained from the second information. Specifically, the coprocessor of the packet forwarding device subtracts the synchronization time difference from the receiving time that is of the packet and that is obtained from the second information, and then calculates a difference between a result obtained through subtraction and the current time of the coprocessor, to obtain the foregoing time difference. That is, the foregoing time difference=the current time of the coprocessor-(the receiving time that is of the packet and that is obtained from the second information-the synchronization time difference).

In this way, when determining that the foregoing time difference is less than the aging duration, the coprocessor of the packet forwarding device determines that the packet forwarding device receives the second packet within the aging duration. On the contrary, when determining that the time difference is greater than the aging duration, the coprocessor of the packet forwarding device determines that no second packet is received within the aging duration. A case in which the time difference is equal to the aging duration is not limited in this embodiment of this application. For example, when the time difference is equal to the aging duration, the coprocessor of the packet forwarding device may determine that the second packet is received within the aging duration, or determine that no second packet is received within the aging duration.

### Implementation 2

When creating the flow entry, the processor of the packet forwarding device creates an aging flag for the flow entry. Optionally, the aging flag may be created in preset space of a memory, or the aging flag may be created in the second information of the flow entry. The preset space may be the same as or different from the foregoing preset space for storing the timestamp. This is not limited. It should be understood that, compared with creating the aging flag in the preset space of the memory, creating the aging flag in the second information of the flow entry can reduce a quantity of times that the processor or the coprocessor of the packet forwarding device subsequently accesses the memory.

After creating the aging flag, the processor of the packet forwarding device clears the aging flag. Each time the coprocessor of the packet forwarding device finds, in the flow table based on a received packet, a flow entry matching flow identification information carried in the packet, the coprocessor of the packet forwarding device clears an aging flag of the flow entry.

Specifically, the coprocessor of the packet forwarding device periodically polls an aging flag (referred to as a target aging flag below) of the target flow entry.

When the coprocessor of the packet forwarding device obtains the aging flag of the target flow entry through polling in a polling periodicity, in a case, if the coprocessor of the packet forwarding device determines that a value of the target aging flag reaches a threshold (or referred to as a first threshold), the coprocessor determines that the packet forwarding device does not receive the second packet within the aging duration. In another case, if the coprocessor of the packet forwarding device determines that a value of the target aging flag is less than a first threshold, the coprocessor increases the value of the target aging flag by 1. The first threshold may be a quantity k in which the aging duration is equally divided into a plurality of pieces of duration. In this case, a periodicity of polling the flow entry by the coprocessor of the packet forwarding device is 1/k aging duration.

It may be understood that, when the coprocessor of the packet forwarding device determines that the value of the target aging flag reaches the first threshold, it indicates that after the coprocessor of the packet forwarding device receives the second packet and clears the target aging flag last time, the packet forwarding device does not receive the second packet until a moment at which the coprocessor determines that the value of the target aging flag reaches the first threshold. Duration from last time the target aging flag is cleared to the moment at which it is determined that the value of the target aging flag reaches the first threshold is at least a product of the periodicity (that is, the 1/k aging duration) of polling the flow entry by the coprocessor of the packet forwarding device and the first threshold k, that is, the aging duration. Therefore, when the coprocessor of the packet forwarding device determines that the value of the target aging flag reaches the first threshold, it indicates that the packet forwarding device does not receive the second packet within the aging duration.

It should be noted that a thread in which the coprocessor of the packet forwarding device clears the aging flag is a thread of performing S101 to S104. The thread and a thread in which the coprocessor of the packet forwarding device polls the aging flag of the target flow entry are different threads. Because a write conflict may occur when a same aging flag is updated in different threads, in the implementation 2, lock access needs to be performed on different threads of the coprocessor of the packet forwarding device when the aging flag is accessed.

**The following describes, with reference to the accompanying drawings in detail, the foregoing descriptions that "the coprocessor of the packet forwarding device reports the aging information of the target flow entry to the processor by using the ring storage queue".**

The packet forwarding device may configure the ring storage queue in the memory, where the ring storage queue includes a plurality of storage units distributed in a ring, and one storage unit in the ring storage queue is configured to store aging information of one flow entry. In an example, in this embodiment of this application, a quantity of storage units in the ring storage queue may be set to a multiple of 8.

The storage units in the ring storage queue are ranked in ascending order along ring distribution starting from any storage unit. For example, the storage units in the ring storage queue are ranked, starting from any storage unit, in ascending order along a preset direction of a ring in which the ring storage queue is located. The preset direction of the ring in which the ring storage queue is located may be a clockwise direction or an anticlockwise direction of the ring. This is not limited. It can be learned that the ranking of the storage unit in the ring storage queue may represent a location of the storage unit in the ring storage queue.

A read pointer and a write pointer are configured in the ring storage queue.

The read pointer points to any storage unit that stores the aging information in the ring storage queue, and indicates that the processor of the packet forwarding device may read the aging information stored in the storage unit. In addition, when data stored in the storage unit to which the read pointer points is read, the storage unit becomes an empty storage unit, and the read pointer moves, based on the foregoing preset direction, toward a storage unit that is ranked to be adjacent to the storage unit.

The write pointer points to any empty storage unit in the ring storage queue, and indicates that the coprocessor of the packet forwarding device may write the aging information of the flow entry into the storage unit. In addition, when data is written into the storage unit to which the write pointer points, the write pointer moves, based on the foregoing preset direction, toward a storage unit that is ranked to be adjacent to the storage unit.

In this way, the coprocessor of the packet forwarding device writes the aging information of the flow entry into the storage unit of the ring storage queue, and the processor of the packet forwarding device reads the aging information that is of the flow entry and that is stored in the storage unit of the ring storage queue, so that an objective of reporting the aging information of the target flow entry by the coprocessor of the packet forwarding device to the processor can be achieved.

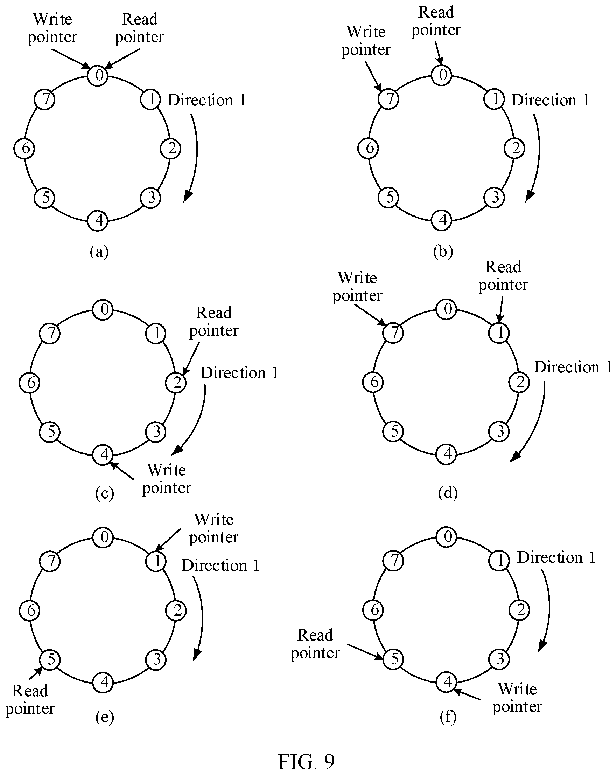

That the foregoing preset direction is the clockwise direction of the ring in which the ring storage queue is located, and the ring storage queue includes eight storage units distributed in a ring is used as an example. For example, FIG. 9 is a diagram of a structure of a ring storage queue according to an embodiment of this application.

As shown in FIG. 9, the ring storage queue 90 includes eight storage units distributed in a ring: a storage unit 0 to a storage unit 7, and the storage units are represented by circles marked with numbers in FIG. 9. The storage unit 0 is used as a starting point, and the eight storage units are ranked in ascending order along a clockwise direction of a ring in which the ring storage queue 90 is located, and the rankings are 0 to 7. The clockwise direction of the ring in which the ring storage queue 90 is located is a direction 1 shown in FIG. 9. As shown in FIG. 9, the ranking of the storage unit 0 is 0, the ranking of the storage unit 1 is 1, the ranking of the storage unit 2 is 2, ..., and the ranking of the storage unit 7 is 7.

In addition, as shown in (a) in FIG. 9, both a read pointer and a write pointer configured for the ring storage queue 90 point to the storage unit 0. In this case, it indicates that all storage units in the current ring storage queue 90 are empty.

Specifically, the coprocessor of the packet forwarding device may write the aging information of the target flow entry into the ring storage queue in the following two manners.

Manner 1: After determining the aging information of the target flow entry, the coprocessor of the packet forwarding device directly writes the aging information of the target flow entry into a storage unit to which the write pointer points in the ring storage queue.

Manner 2: After determining the aging information of the target flow entry, the coprocessor of the packet forwarding device first determines, based on locations of the read pointer and the write pointer in the ring storage queue, whether a quantity of empty storage units in the ring storage queue is greater than or equal to a threshold (or referred to as a second threshold). In addition, when determining that the quantity of empty storage units in the ring storage queue is greater than or equal to the second threshold, the coprocessor writes the aging information of the target flow entry into a storage unit to which the write pointer points. The second threshold may be an integer greater than 1. For example, a value of the second threshold may be 2 or 3.

It may be understood that, when the quantity of empty storage units in the ring storage queue is greater than or equal to the second threshold, it indicates that a storage status of the ring storage queue is not nearly full, that is, it indicates that there are still empty storage units whose quantity is greater than or equal to the second threshold in the ring storage queue. On the contrary, when the quantity of empty storage units in the ring storage queue is less than the second threshold, it indicates that a storage status of the ring storage queue is nearly full, that is, it indicates that the storage units in the ring storage queue are about to be full, or it is understood as that there are only empty storage units whose quantity is less than a preset quantity in the ring storage queue.

Before the aging information is written into the storage unit to which the write pointer points, whether the quantity of empty storage units in the ring storage queue is greater than or equal to the second threshold is first determined, and the aging information is written into the storage unit to which the write pointer points only when the quantity is greater than or equal to the second threshold. In this way, a problem of a write overflow occurring in the ring storage queue can be effectively avoided. The write overflow is a phenomenon that data is written into the storage unit to which the write pointer points in the ring storage queue, and then the write pointer points to a same storage unit as the read pointer after movement. In an example, as shown in (b) in FIG. 9, the write pointer of the ring storage queue 90 points to the storage unit 7, and the read pointer points to the storage unit 0. After the coprocessor of the packet forwarding device writes the aging information into the storage unit 7, the write pointer moves to the storage unit 0 based on the direction 1. If aging information in the storage unit 0 is not read at this time, the read pointer and the write pointer of the ring storage queue 90 overlap. In this case, a write overflow phenomenon occurs. In this case, the storage unit in the ring storage queue 90 is cleared, and therefore, the aging information that is not read is lost. As a result, the processor of the packet forwarding device cannot obtain the aging information, and therefore, aging processing of a corresponding flow entry fails.

Optionally, the coprocessor of the packet forwarding device may determine, based on rankings of the storage units to which the read pointer and the write pointer point in the ring storage queue, whether the quantity of empty storage units in the ring storage queue is greater than or equal to the second threshold. For ease of description, in the following, the ranking of the storage unit to which the read pointer points in the ring storage queue is referred to as a read ranking, and the ranking of the storage unit to which the write pointer points in the ring storage queue is referred to as a write ranking.

That the storage units in the ring storage queue are ranked in the foregoing preset direction in ascending order is used as an example. In a possible case, when the coprocessor of the packet forwarding device determines that the read ranking in the ring storage queue is less than the write ranking, it indicates that the read pointer and the write pointer in the ring storage queue cross a head and a tail of the ring storage queue. In this case, the coprocessor of the packet forwarding device determines whether a difference obtained by subtracting the write ranking from a sum of the read ranking and the quantity of storage units in the ring storage queue is greater than or equal to the second threshold. In another possible case, when the coprocessor of the packet forwarding device determines that the read ranking in the ring storage queue is greater than the write ranking, it indicates that the read pointer and the write pointer in the ring storage queue do not cross a head and a tail of the ring storage queue. In this case, the coprocessor of the packet forwarding device determines whether a difference obtained by subtracting the write ranking from the read ranking is greater than or equal to the second threshold.

It should be understood that the difference indicates the quantity of empty storage units in the ring storage queue. Further, when determining that the difference is greater than or equal to the second threshold, the coprocessor of the packet forwarding device determines that the quantity of empty storage units in the ring storage queue is greater than or equal to the second threshold. When determining that the difference is less than the second threshold, the coprocessor of the packet forwarding device determines that the quantity of empty storage units in the ring storage queue is less than the second threshold.

That the value of the second threshold is 3 is used as an example. For example, as shown in (c) in FIG. 9, when the coprocessor of the packet forwarding device determines that a write ranking of the ring storage queue 90 is 4 and a read ranking is 2, the coprocessor of the packet forwarding device determines that the read ranking of 2 is less than the write ranking of 4, and then the coprocessor of the packet forwarding device subtracts the write ranking from a sum of the read ranking and a quantity of storage units in the ring storage queue 90 to obtain the foregoing difference, that is, the foregoing difference=2+8-4=6. It indicates that there are still six empty storage units (including the storage units 1, 0, 7, 6, and 5 and the storage unit 4 to which the write pointer points) in the ring storage queue 90. Further, because 6>3, the coprocessor of the packet forwarding device determines that a quantity of empty storage units in the ring storage queue 90 is greater than the second threshold.

Similarly, as shown in (d) in FIG. 9, when the coprocessor of the packet forwarding device determines that a write ranking of the ring storage queue 90 is 7 and a read ranking is 1, the coprocessor of the packet forwarding device determines that the read ranking of 1 is less than the write ranking of 7, and then the coprocessor of the packet forwarding device determines that the foregoing difference=1+8-7=2. It indicates that there are only two empty storage units (including the storage unit 0 and the storage unit 7 to which the write pointer points) in the ring storage queue 90. Further, because 2<3, the coprocessor of the packet forwarding device determines that a quantity of empty storage units in the ring storage queue 90 is less than the second threshold.

As shown in (e) in FIG. 9, when the coprocessor of the packet forwarding device determines that a write ranking of the ring storage queue 90 is 1 and a read ranking is 5, the coprocessor of the packet forwarding device determines that the read ranking of 5 is greater than the write ranking of 1, and then the coprocessor of the packet forwarding device obtains the foregoing difference based on a difference obtained by subtracting the write ranking from the read ranking, that is, the foregoing difference=5-1=4. It indicates that there are still four empty storage units (including the storage units 4, 3, and 2 and the storage unit 1 to which the write pointer points) in the ring storage queue 90. Further, because 4>3, the coprocessor of the packet forwarding device determines that a quantity of empty storage units in the ring storage queue 90 is greater than the second threshold.

Similarly, as shown in (f) in FIG. 9, when the coprocessor of the packet forwarding device determines that a write ranking of the ring storage queue 90 is 4 and a read ranking is 5, the coprocessor of the packet forwarding device determines that the read ranking of 5 is greater than the write ranking of 4, and then the coprocessor of the packet forwarding device determines that the foregoing difference=5-4=1. It indicates that there is only one empty storage unit (that is, the storage unit 4 to which the write pointer points) in the ring storage queue 90. Further, because 1<3, the coprocessor of the packet forwarding device determines that a quantity of empty storage units in the ring storage queue 90 is less than the second threshold.

Further, when determining that the quantity of empty storage units in the ring storage queue is greater than or equal to the second threshold, the coprocessor of the packet forwarding device writes the aging information of the target flow entry into the storage unit to which the write pointer points.

When determining that the quantity of empty storage units in the ring storage queue is less than or equal to the second threshold, the coprocessor of the packet forwarding device sends prompt information to the processor of the packet forwarding device, to prompt the processor to read the aging information stored in the ring storage queue, and re-performs, after preset duration, the foregoing process of determining whether the quantity of empty storage units in the ring storage queue is greater than or equal to the second threshold. A specific value of the preset duration is not specifically limited in this embodiment of this application.

In some possible cases, the coprocessor of the packet forwarding device may poll the flow table by using a plurality of threads. For example, the coprocessor of the packet forwarding device divides the flow table into a plurality of sub-flow tables, and then polls a flow entry in each sub-flow table in parallel by using a plurality of threads, to improve efficiency of polling the flow table. In this case, aging information of a plurality of flow entries may be determined at the same time or in short time in the plurality of threads used by the coprocessor of the packet forwarding device to poll the flow table, and the aging information needs to be written into the ring storage queue.

In this case, to avoid a write conflict or a write overflow that occurs when the aging information is written into the storage unit of the ring storage queue in a plurality of threads by performing the foregoing manner 1 or manner 2, optionally, the coprocessor of the packet forwarding device may preconfigure a first scheduler, and schedule, through the first scheduler according to a first preset policy, a plurality of threads in which the aging information needs to be written into the ring storage queue, to sequentially perform the foregoing manner 1 or manner 2 in the plurality of threads according to a sequence indicated by the first preset policy, to write respectively determined aging information into the storage unit of the ring storage queue.

Further, after the coprocessor of the packet forwarding device writes the aging information into the ring storage queue, the processor of the packet forwarding device may read, from the ring storage queue, the aging information written by the coprocessor. In this way, an objective of reporting the aging information by the coprocessor of the packet forwarding device to the processor is achieved.

Optionally, the processor of the packet forwarding device may periodically read the aging information stored in the ring storage queue. Periodicity duration of reading the aging information stored in the ring storage queue is not specifically limited herein.

Optionally, after receiving the prompt information sent by the coprocessor, the processor of the packet forwarding device may read the aging information stored in the ring storage queue.

In some possible cases, the processor of the packet forwarding device reads the aging information in the ring storage queue by using a plurality of threads, so that the foregoing deletion processing is separately performed in the plurality of threads based on respectively obtained aging information. In this case, to avoid reading the aging information from a storage unit of a same ring storage queue in the plurality of threads, optionally, the processor of the packet forwarding device may preconfigure a second scheduler, and schedule, through the second scheduler according to a second preset policy, a plurality of threads that are in the processor and that are used to read the aging information from the storage unit of the ring storage queue, to sequentially read the aging information from the storage unit of the ring storage queue in the plurality of threads based on a sequence indicated by the second preset policy.

In still some possible embodiments, data access formats preset by the processor and the coprocessor of the packet forwarding device are different. For example, the processor accesses data by using a big-endian format, and the coprocessor accesses data by using a little-endian format. Therefore, when the data access formats preset by the processor and the coprocessor of the packet forwarding device are different, either end of the processor and the coprocessor needs to perform endian conversion on data exchanged between the processor and the coprocessor, to avoid an error in the exchanged data.

The data exchanged between the processor and the coprocessor may be updated second information written by the coprocessor into the foregoing second storage space, and the processor may access the second information later. Alternatively, the data exchanged between the processor and the coprocessor may be aging information that needs to be read by the processor and that is written by the coprocessor into the foregoing storage unit of the ring storage queue after the aging information is determined. Alternatively, the data exchanged between the processor and the coprocessor may be a first packet sent by the coprocessor to the processor, an aging packet that carries the aging information and that is sent by the coprocessor to the processor after the aging information is determined, or the like. This is not limited thereto.

The following describes endian conversion performed on different objects in data.

### (1) Endian conversion performed on Words in the data: Sequences of Words in each piece of data are switched.

For example, that endian conversion is performed on Words in a piece of 128-bit data is used as an example, and it is assumed that the Words in the 128-bit data are Word 0/Word 1/Word 2/Word 3. When the endian conversion is performed, sequences of the four Words are switched, so that the four Words are converted into Word 3/Word 2/Word 1/Word 0.

Specifically, before the endian conversion is performed, a data structure of the four Words is as follows:

```
         struct table_xxx{
         //128bit-data
         //Word0
          ...
         //Word1
          ...
         //Word2
          ...
         //Word3
          ...
          }
 
```

After the endian conversion is performed on the four Words, a data structure is as follows:

```
         struct table_xxx{
         //128bit-data
         //Word3
          ...
         //Word2
          ...
         //Word1
          ...
         //Word0
          ...
          }
```

### (2) Endian conversion performed on bytes in the data: Sequences of bytes in each Word are switched.

For example, that the endian conversion is performed on bytes in a 32-bit Word is used as an example, and it is assumed that the bytes in the 32-bit Word are Byte 0/Byte 1/Byte 2/Byte 3. When the endian conversion is performed, sequences of the four bytes are switched, so that the four bytes are converted into Byte 3/Byte 2/Byte 1/Byte 0.

In addition, in a scenario of crossing fields, that is, a data segment representing a definition in the data crosses different bytes (that is, eight bits)/different Words, in this case, endian conversion only needs to be performed on four bytes/four Words including the crossed fields.

In an example, when the data segment representing a definition in the data crosses eight bits but does not cross 16 bits, the data structure is specifically, for example:

```
         struct table_xxx{
          ...
         //Word1
         uint3 Pri;
         uint1 CFI;
         uint12 VLAN;
         uint1 V4EN;
         uint1 V6EN;
         uint14 VRFID;
```

uint3 Pri indicates that a Pri field occupies three bits, uint1 CFI indicates that a CFI field occupies one bit, uint12 VLAN indicates that a VLAN field occupies 12 bits, uint1 V4EN indicates that a V4EN field occupies one bit, uint1 V6EN indicates that a V6EN field occupies one bit, and uint14 VRFID indicates that a VRFID field occupies 14 bits. It can be learned that both the VLAN field and the VRFID field include more than 8 bits but less than 16 bits, that is, the VLAN field and the VRFID field cross different byte fields.

In this case, because the foregoing data has 32 bits in total, the foregoing data may be carried in a 32-bit Word 1. It is assumed that storage addresses in a memory are A0/A1/A2/A3 sequentially from a low bit to a high bit. As shown in Table 4, a byte sequence of the Word 1 on a little-endian format side is B0/B1/B2/B3, where B0 is used to carry bits 0 to 7 of the VRFID field, B1 is used to carry bits 8 to 13 of the VRFID field, a bit 1 of the V6EN field, and a bit 1 of the V4EN, B2 is used to carry bits 0 to 7 of the VLAN field, and B3 is used to carry bits 8 to 11 of the VLAN field, a bit of the CFI field, and bits 0 to 2 of the Pri field.

Further, as shown in Table 4, after the endian conversion is performed, sequences of four bytes of the Word 1 are switched, and the Word 1 is converted into a big-endian format: B3/B2/B1/B0.

**Table 4**

| | | | | | |
|---|---|---|---|---|---|
| Little-endian format side | Address | A0 | A1 | A2 | A3 |
| | Word 1 | B0 | B1 | B2 | B3 |
| | Corresponding field | Bits 0 to 7 of the VRFID field | Bits 8 to 13 of the VRFID field, bit 1 of the V6EN field, and bit 1 of the V4EN | Bits 0 to 7 of the VLAN field | Bits 8 to 11 of the VLAN field, bit of the CFI field, and bits 0 to 2 of the Pri field |
| Big-endian format side | Address | A0 | A1 | A2 | A3 |
| | Word 1 | B3 | B2 | B1 | B0 |
| | Corresponding field | Bits 8 to 11 of the VLAN field, bit of the CFI field, and bits 0 to 2 of the Pri field | Bits 0 to 7 of the VLAN field | Bits 8 to 13 of the VRFID field, bit 1 of the V6EN field, and bit 1 of the V4EN | Bits 0 to 7 of the VRFID field |

In another example, when the data segment representing a definition in the data crosses 16 bits, the data structure is specifically, for example:

```
         struct table_xxx{
          ...
         //Word2
         uint8 Comp;
         uint24 QID;
```

uint8 Comp indicates that a Comp field occupies eight bits, and uint24 QID indicates that a QID field occupies 24 bits. The QID field includes more than 16 bits, that is, the QID field crosses different byte fields.

In this case, because the foregoing data has 32 bits in total, the foregoing data may be carried in a 32-bit Word 2. It is assumed that storage addresses in a memory are A4/A5/A6/A7 sequentially from a low bit to a high bit. As shown in Table 5, a byte sequence of the Word 2 on a little-endian format side is B4/B5/B6/B7, where B4 is used to carry bits 0 to 7 of the QID field, B5 is used to carry bits 8 to 15 of the QID field, B6 is used to carry bits 16 to 23 of the QID field, and B7 is used to carry bits 0 to 7 of the Comp field.

Further, as shown in Table 5, after the endian conversion is performed, sequences of four bytes of the Word 2 are switched, and the Word 2 is converted into a big-endian format: B7/B6/B5/B4.

**Table 5**

| | | | | | |
|---|---|---|---|---|---|
| Little-endian format side | Address | A4 | A5 | A6 | A7 |
| | Word 2 | B4 | B5 | B6 | B7 |
| | Corresponding field | Bits 0 to 7 of the QID field | Bits 8 to 15 of the QID field | Bits 16 to 23 of the QID field | Bits 0 to 7 of the Comp field |
| Big-endian format side | Address | A4 | A5 | A6 | A7 |
| | Word 2 | B7 | B6 | B5 | B4 |
| | Corresponding field | Bits 0 to 7 of the Comp field | Bits 16 to 23 of the QID field | Bits 8 to 15 of the QID field | Bits 0 to 7 of the QID field |

The foregoing examples are examples of crossing different byte fields. When the data segment representing a definition in the data crosses different Word fields, for example, the data segment includes 45 bits, that is, the data segment crosses two 32-bit Words, endian conversion may be performed on 128-bit data including four 32-bit Words. Details are not described again.

Similarly, when the data segment representing a definition in the data crosses different 128-bit data fields, for example, the data segment includes 150 bits, that is, the data segment crosses two pieces of 128-bit data, endian conversion may be performed on data including four pieces of 128-bit data. Details are not described again.

In this way, in the foregoing endian conversion manner, when the data access formats of the processor and the coprocessor of the packet forwarding device are different, the processor or the coprocessor performs endian conversion on the data exchanged between the coprocessor and the processor of the packet forwarding device. Therefore, the error in the data exchanged between the coprocessor and the processor of the packet forwarding device can be avoided.

The foregoing mainly describes the solutions provided in embodiments of this application from a perspective of the methods.

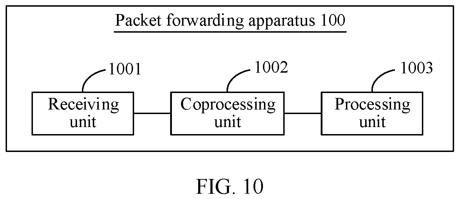

To implement the foregoing functions, FIG. 10 is a diagram of a structure of a packet forwarding apparatus 100 according to an embodiment of this application. The packet forwarding apparatus 100 may be the foregoing packet forwarding device or a functional module in the foregoing packet forwarding device. This is not limited. The packet forwarding apparatus 100 may be configured to perform the foregoing packet forwarding method, for example, configured to perform the method shown in FIG. 4, FIG. 5, FIG. 6, or FIG. 8. The packet forwarding apparatus 100 may include a receiving unit 1001, a coprocessing unit 1002, and a processing unit 1003.

The receiving unit 1001 is configured to receive a first packet. The coprocessing unit 1002 is configured to query a flow table based on flow identification information carried in the first packet, and configured to: when a target flow entry matching the flow identification information carried in the first packet exists in the flow table, forward the first packet based on the target flow entry. The flow table includes at least one flow entry, the flow entry is a session entry created by the processing unit 1003 based on flow identification information of any received flow, and the target flow entry is a session entry created by the processing unit 1003 based on flow identification information of a first flow to which the first packet belongs.

In an example, with reference to FIG. 4, the receiving unit 1001 may be configured to perform S101, and the coprocessing unit 1002 may be configured to perform S102 and S103.

Optionally, when the target flow entry does not exist in the flow table, the flow identification information carried in the first packet is used by the processing unit 1003 to create the target flow entry.

Optionally, the coprocessing unit 1002 is an NP, and the processing unit 1003 is a CPU or an AP.

Optionally, the coprocessing unit 1002 is further configured to determine that aging needs to be performed on the target flow entry, and configured to report aging information of the target flow entry to the processing unit 1003. The aging information of the target flow entry indicates the processing unit 1003 to perform deletion processing on the target flow entry.

In an example, with reference to FIG. 8, the coprocessing unit 1002 may be configured to perform S301 and S302.

Optionally, the coprocessing unit 1002 is specifically configured to: poll the flow entry in the flow table, to determine whether a second packet is received within aging duration, and when determining that no second packet is received within the aging duration, determine that the aging needs to be performed on the target flow entry. The second packet carries flow identification information matching the target flow entry.

In an example, with reference to FIG. 8, the coprocessing unit 1002 may be configured to perform S301.

Optionally, a memory of the packet forwarding apparatus 100 includes a ring storage queue, the ring storage queue includes a plurality of storage units distributed in a ring, one storage unit in the ring storage queue is configured to store aging information of one flow entry, and the processing unit 1003 is configured to read aging information stored in a storage unit to which a read pointer points in the ring storage queue. The coprocessing unit 1002 is further specifically configured to write the aging information of the target flow entry into a storage unit to which a write pointer points in the ring storage queue, where the write pointer is used to point to an empty storage unit in the ring storage queue.

In an example, with reference to FIG. 8, the coprocessing unit 1002 may be configured to perform S302.

Optionally, the target flow entry includes a first pointer, the first pointer is used to point to storage space for storing first information, the first information includes the flow identification information of the first flow and forwarding information of the first flow, and the forwarding information of the first flow indicates a forwarding type and/or a forwarding action of the first flow.

Optionally, the first information further includes a second pointer, the second pointer is used to point to storage space for storing second information, the second information includes association data of a newly received packet in the first flow, the association data of the packet in the first flow includes data for collecting statistics on flow information of the first flow, and the flow information of the first flow is used to locate an exception when the exception occurs during transmission of the first flow. The coprocessing unit 1002 is further configured to: when the target flow entry matching the flow identification information carried in the first packet exists in the flow table, update the second information, where updated second information includes association data of the first packet.

In an example, with reference to FIG. 5, the coprocessing unit 1002 may be configured to perform S104.

Optionally, the first information further includes a third pointer, the third pointer is used to point to storage space for storing third information, and the third information includes a control parameter of a process for processing the first flow in the processing unit 1003.

Optionally, the flow entry in the flow table is stored in preset storage space, and the first information, the second information, and the third information are stored in storage space that the processing unit 1003 applies for from an address pool when the target flow entry is created.

Optionally, the flow identification information includes source address information and destination address information of the flow.

For specific descriptions of the foregoing optional manners, refer to the foregoing method embodiments. Details are not described herein again. In addition, for any explanation and description of beneficial effects of the packet forwarding apparatus 100 provided above, refer to the foregoing corresponding method embodiments. Details are not described again.

In an example, with reference to FIG. 1, a function implemented by the receiving unit 1001 in the packet forwarding apparatus 100 may be implemented through the network interface 104 in FIG. 1. A function implemented by the coprocessing unit 1002 may be implemented by executing the program code in the memory 102 in FIG. 1 by the coprocessor 103 in FIG. 1. A function implemented by the processing unit 1003 may be implemented by executing the program code in the memory 102 in FIG. 1 by the processor 101 in FIG. 1.

A person skilled in the art should be easily aware that, in combination with examples of units and algorithm steps described in embodiments disclosed in this specification, this application can be implemented by using hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

It should be noted that, in FIG. 10, division into the modules and the units is an example and is merely logical function division. In actual implementation, another division manner may be used. For example, two or more functions may alternatively be integrated into one processing module. The integrated module may be implemented in a form of hardware, or may be implemented in a form of a software functional module.

An embodiment of this application further provides a chip system. The chip system includes a processor and a coprocessor. In an example, the chip system may be a SoC including a processor and a coprocessor. This is not limited thereto. The processor is configured to create a flow entry based on flow identification information of any received flow. Herein, the flow entry indicates the coprocessor to forward a packet. The coprocessor is configured to forward a first packet according to any method provided in the first aspect after the first packet is received. For functions implemented by the processor and the coprocessor in the chip system, refer to the descriptions in the foregoing methods. Details are not described again.

An embodiment of this application further provides a computer program product and a computer-readable storage medium configured to store the computer program product. The computer program product may include one or more program instructions. When the one or more program instructions are run by a packet forwarding device/packet forwarding apparatus, the functions or some of the functions described above for the method shown in FIG. 4, FIG. 5, FIG. 6, or FIG. 8 may be provided. Therefore, for example, one or more features referring to S101 to S103 in FIG. 4 may be undertaken by the one or more instructions in the computer program product.

In some examples, the packet forwarding device/packet forwarding apparatus that performs the method shown in FIG. 4, FIG. 5, FIG. 6, or FIG. 8 may be configured to provide various operations, functions, or actions in response to the one or more program instructions stored in the computer-readable storage medium.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When computer-executable instructions are executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A packet forwarding method, applied to a packet forwarding device, wherein the packet forwarding device comprises a processor and a coprocessor, and the method comprises:
receiving a first packet;
querying a flow table based on flow identification information carried in the first packet, wherein the flow table comprises at least one flow entry, and the flow entry is a session entry created by the processor based on flow identification information of any received flow; and
when a target flow entry matching the flow identification information carried in the first packet exists in the flow table, forwarding, by the coprocessor, the first packet based on the target flow entry, wherein the target flow entry is a session entry created by the processor based on flow identification information of a first flow to which the first packet belongs.

2. The method according to claim 1, wherein when the target flow entry does not exist in the flow table, the flow identification information carried in the first packet is used by the processor to create the target flow entry.

3. The method according to claim 1 or 2, wherein the coprocessor is a network processor NP, and the processor is a central processing unit CPU or an application processor AP.

4. The method according to any one of claims 1 to 3, wherein the method further comprises:
determining, using the coprocessor, that aging needs to be performed on the target flow entry; and
reporting, using the coprocessor, aging information of the target flow entry to the processor, wherein the aging information of the target flow entry indicates the processor to perform deletion processing on the target flow entry.

5. The method according to claim 4, wherein the determining, using the coprocessor, that aging needs to be performed on the target flow entry comprises:
polling the flow entry in the flow table using the coprocessor, to determine whether a second packet is received within aging duration, wherein the second packet carries flow identification information matching the target flow entry; and
when determining that no second packet is received within the aging duration, determining that the aging needs to be performed on the target flow entry.

6. The method according to claim 4 or 5, wherein a memory of the packet forwarding device comprises a ring storage queue, the ring storage queue comprises a plurality of storage units distributed in a ring, one storage unit in the ring storage queue is configured to store aging information of one flow entry, the processor is configured to read aging information stored in a storage unit to which a read pointer points in the ring storage queue, and the reporting, using the coprocessor, aging information of the target flow entry to the processor comprises: writing, using the coprocessor, the aging information of the target flow entry into a storage unit to which a write pointer points in the ring storage queue, wherein the write pointer is used to point to an empty storage unit in the ring storage queue.

7. The method according to any one of claims 1 to 6, wherein the target flow entry comprises a first pointer, the first pointer is used to point to storage space for storing first information, the first information comprises the flow identification information of the first flow and forwarding information of the first flow, and the forwarding information of the first flow indicates a forwarding type and/or a forwarding action of the first flow.

8. The method according to claim 7, wherein the first information further comprises a second pointer, the second pointer is used to point to storage space for storing second information, the second information comprises association data of a newly received packet in the first flow, the association data comprises data for collecting statistics on flow information of the first flow, the flow information is used to locate an exception when the exception occurs during transmission of the first flow, and when the target flow entry matching the flow identification information carried in the first packet exists in the flow table, the method further comprises: updating the second information using the coprocessor, wherein updated second information comprises association data of the first packet.

9. The method according to claim 7 or 8, wherein the first information further comprises a third pointer, the third pointer is used to point to storage space for storing third information, and the third information comprises a control parameter of a process for processing the first flow in the processor.

10. The method according to claim 9, wherein the flow entry in the flow table is stored in preset storage space, and the first information, the second information, and the third information are stored in storage space that the processor applies for from an address pool when the target flow entry is created.

11. The method according to any one of claims 1 to 10, wherein the flow identification information comprises source address information and destination address information of the flow.

12. A packet forwarding apparatus, wherein the apparatus comprises a processing unit and a coprocessing unit, and the apparatus further comprises:
a receiving unit, configured to receive a first packet, wherein
the coprocessing unit is configured to: query a flow table based on flow identification information carried in the first packet, wherein the flow table comprises at least one flow entry, and the flow entry is a session entry created by the processing unit based on flow identification information of any received flow; and forward the first packet based on a target flow entry when the target flow entry matching the flow identification information carried in the first packet exists in the flow table, wherein the target flow entry is a session entry created by the processing unit based on flow identification information of a first flow to which the first packet belongs.

13. The apparatus according to claim 12, wherein when the target flow entry does not exist in the flow table, the flow identification information carried in the first packet is used by the processing unit to create the target flow entry.

14. The apparatus according to claim 12 or 13, wherein the coprocessing unit is a network processor NP, and the processing unit is a central processing unit CPU or an application processor AP.

15. The apparatus according to any one of claims 12 to 14, wherein the coprocessing unit is further configured to: determine that aging needs to be performed on the target flow entry, and report aging information of the target flow entry to the processing unit, wherein the aging information of the target flow entry indicates the processing unit to perform deletion processing on the target flow entry.

16. The apparatus according to claim 15, wherein the coprocessing unit is specifically configured to:
poll the flow entry in the flow table, to determine whether a second packet is received within aging duration, wherein the second packet carries flow identification information matching the target flow entry; and
when determining that no second packet is received within the aging duration, determine that the aging needs to be performed on the target flow entry.

17. The apparatus according to claim 15 or 16, wherein a memory of the packet forwarding apparatus comprises a ring storage queue, the ring storage queue comprises a plurality of storage units distributed in a ring, one storage unit in the ring storage queue is configured to store aging information of one flow entry, and the processing unit is configured to read aging information stored in a storage unit to which a read pointer points in the ring storage queue; and the coprocessing unit is further specifically configured to write the aging information of the target flow entry into a storage unit to which a write pointer points in the ring storage queue, wherein the write pointer is used to point to an empty storage unit in the ring storage queue.

18. The apparatus according to any one of claims 12 to 17, wherein the target flow entry comprises a first pointer, the first pointer is used to point to storage space for storing first information, the first information comprises the flow identification information of the first flow and forwarding information of the first flow, and the forwarding information of the first flow indicates a forwarding type and/or a forwarding action of the first flow.

19. The apparatus according to claim 18, wherein the first information further comprises a second pointer, the second pointer is used to point to storage space for storing second information, the second information comprises association data of a newly received packet in the first flow, the association data comprises data for collecting statistics on flow information of the first flow, the flow information is used to locate an exception when the exception occurs during transmission of the first flow, and the coprocessing unit is further configured to: when the target flow entry matching the flow identification information carried in the first packet exists in the flow table, update the second information, wherein updated second information comprises association data of the first packet.

20. The apparatus according to claim 18 or 19, wherein the first information further comprises a third pointer, the third pointer is used to point to storage space for storing third information, and the third information comprises a control parameter of a process for processing the first flow in the processing unit.

21. The apparatus according to claim 20, wherein the flow entry in the flow table is stored in preset storage space, and the first information, the second information, and the third information are stored in storage space that the processing unit applies for from an address pool when the target flow entry is created.

22. The apparatus according to any one of claims 12 to 21, wherein the flow identification information comprises source address information and destination address information of the flow.

23. A packet forwarding device, comprising a processor and a coprocessor, wherein
the processor is configured to invoke program instructions stored in a memory, to create a flow entry based on flow identification information of any flow received by the packet forwarding device, wherein the flow entry indicates the coprocessor to forward a packet; and
the coprocessor is configured to invoke program instructions stored in the memory, to forward a first packet according to the method according to any one of claims 1 to 11 after the packet forwarding device receives the first packet.

24. A chip system, comprising a processor and a coprocessor, wherein
the processor is configured to create a flow entry based on flow identification information of any received flow, wherein the flow entry indicates the coprocessor to forward a packet; and
the coprocessor is configured to forward a first packet according to the method according to any one of claims 1 to 11 after the first packet is received.
